# EUROPEAN PATENT SPECIFICATION

(11) **EP 3 442 213 B1**
(45) Date of publication and mention of the grant of the patent: **09.12.2020**
(21) Application number: 18187805.9
(22) Date of filing: 07.08.2018
(51) Int. Cl.: H04N 5/225, G01B 1/00, G01N 21/84, G01N 21/954, G03B 37/00

(54) **STRUCTURE WALL IMAGING DEVICE, VEHICLE, AND STRUCTURE WALL IMAGING METHOD**
STRUKTURWANDAUFNAHMEVORRICHTUNG, FAHRZEUG UND STRUKTURWANDAUFNAHMEVERFAHREN
DISPOSITIF D'IMAGERIE DE PAROI DE STRUCTURE, VÉHICULE ET PROCÉDÉ D'IMAGERIE DE PAROI DE STRUCTURE

(30) Priority: 09.08.2017 JP 2017154697; 06.07.2018 JP 2018129397
(43) Date of publication of application: 13.02.2019
(73) Proprietor: Ricoh Company, Ltd., Tokyo 143-8555 (JP)
(72) Inventor: KIKUCHI, Taro, Tokyo, 143-8555 (JP); TAKASU, Shusaku, Tokyo, 143-8555 (JP); SATOH, Hiroyuki, Tokyo, 143-8555 (JP)
(74) Representative: J A Kemp LLP

(56) References cited:
- CN-A- 104 019 742
- CN-A- 104 749 187
- JP-A- 2004 012 152
- KR-A- 20040 020 261
- US-A1- 2016 227 126

## Description

### BACKGROUND

### Technical Field

Embodiments of the present disclosure relate to a structure wall imaging device, a vehicle, and a structure wall imaging method.

### Background Art

In order to maintain and manage structures such as tunnels, the technology is known in photographs of the wall of the structure are taken with a camera mounted on a vehicle while the vehicle travels on a road. A developed image of the entire wall of the structure is then manually generated from the photographs taken with camera.

To alleviate the operation of adjusting the position and/or angle of the camera according to the shape of the tunnel, the system is disclosed that measures the cross-sectional shape of the tunnel inner wall with, for example, a laser beam and photographs the tunnel inner wall while adjusting the position and/or angle of the camera according to the measurement data (JP2011-095222-A).

However, such technologies necessitate additional processes such as focus adjustment in the camera and measurement of the cross-sectional shape of the structure, and the photographing operation takes a lot of time and work.

Particularly, the tunnel is dim inside, and it is difficult to check the focal position after adjusting the focus of the camera that is a precision instrument. In addition, the wall of the tunnel is often composed of concrete, and has less characteristic features and contrast than a typical object docs. For such reasons, the conventional technologies have difficulties in accurately adjusting focus. JP 2004 012152 A, US 2016/227126 A1 and CN 104 019 742 A disclose background art to the present invention.

### SUMMARY

In one aspect of this disclosure, there is provided a vehicle on which is mounted a structure-wall imaging device as defined by the claims.

In another aspect of this disclosure, there is provided a structure-wall imaging method as defined by the claims.

The embodiments of the present disclosure can reduce the time and work in photographing the wall of the structure.

### BRIEF DESCRIPTION OF THE DRAWINGS

The aforementioned and other aspects, features, and advantages of the present disclosure will be better understood by reference to the following detailed description when considered in connection with the accompanying drawings, wherein:
FIG. 1 is a perspective view of an imaging device according to a first embodiment of the present disclosure;
FIG. 2 is a perspective view of a camera unit according to the first embodiment of the present disclosure;
FIG. 3 is a perspective view of an illumination unit according to the first embodiment of the present disclosure;
FIG. 4 is a block diagram of a hardware configuration of the imaging device of FIG. 1;
FIGs. 5A and 5B are illustrations for exaplaining a photographing mode when a vehicle is close to the wall of the tunnel according to the first embodiment of the present disclosure;
FIGs. 6A and 6B are illustrations of a photographing mode when the vehicle is away from the wall of the tunnel according to the first embodiment of the present disclosure;
FIGs. 7A and 7B are illustrations of an example of the effect of changes in relative positions and postures of a camera unit and an illumination unit;
FIG. 8 is an illustration of peripheral components of a guide shaft according to the first embodiment;
FIG. 9 is an illustration of a case where the camera unit and the illumination unit are tilted with respect to a tunnel wall according to the first embodiment;
FIG. 10 is an illustration of peripheral components of an index plunger according to the first embodiment;
FIG. 11 is an illustration of an example in which the illumination direction of illumination light is tilted with respect to the direction in which the imaging device photographs the wall of the tunnel;
FIGs. 12A and 12B are illustrations of the tilt angle formed by the illumination light and photographing light, a light distribution angle of the illumination light, and the illumination area according to the first embodiment;
FIGs. 12C and 12D are other illustrations of the tilt angle formed by the illumination light and photographing light, a light distribution angle of the illumination light, and the illumination area according to the first embodiment;
FIG. 13 is an illustration of the relation of the meandering of the vehicle, the photographing area and the illumination area according to the first embodiment;
FIG. 14 is a flowchart of photographing operations executed by the imaging device according to the first embodiment;
FIG. 15 is a flowchart of photographing operations executed by the imaging device according to the second embodiment;
FIG. 16 is a block diagram of a functional configuration of an imaging device according to a third embodiment;
FIG. 17 is a block diagram of a hardware configuration of the imaging device according to the third embodiment;
FIG. 18 is a flowchart of photographing operations executed by the imaging device according to the third embodiment; and
FIG. 19 is a flowchart of photographing operations executed by the imaging device according to the fourth embodiment.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable.

### First Embodiment

A first embodiment of the present disclosure is described with reference to the drawings. In each drawing, the same reference numerals are given to the same constituent parts, and redundant explanation may be omitted in some cases.

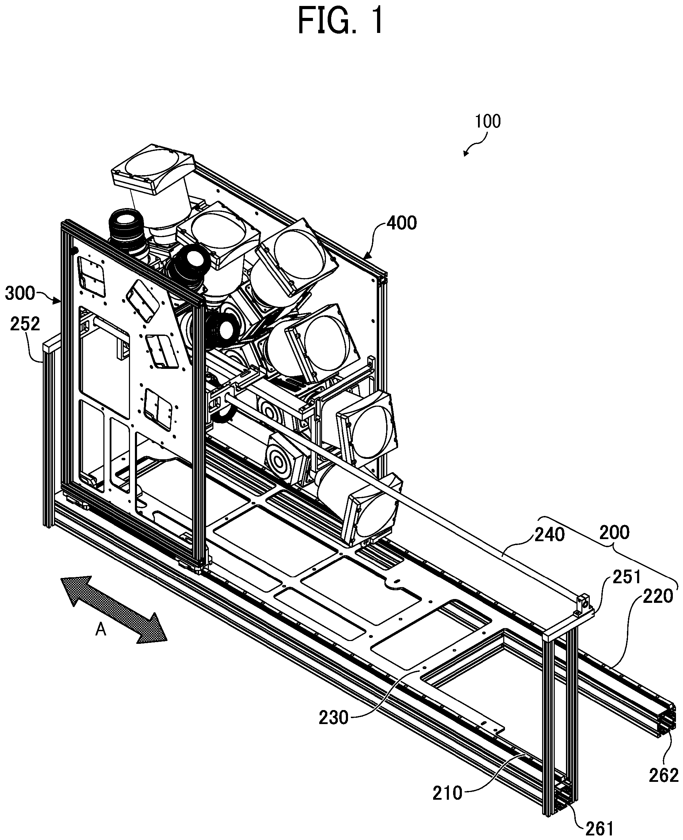

FIG. 1 is an illustration of a configuration example of an imaging device 100 (a structure-wall imaging device) according to an embodiment of the present disclosure.

The imaging device 100 according to the present embodiment, which captures the structure wall, includes a slide unit 200 (an example of a mechanical component), a camera unit 300 (an example of an image acquisition unit), and an illumination unit 400.

The slide unit 200 is a member that slides the camera unit 300 and the illumination unit 400, for example, in the direction indicated by arrow A in FIG. 1. In other words, the positions of the camera unit 300 and the illumination unit 400 are changeable in the direction indicated by arrow A in FIG. 1, using the slide unit 200.

The camera unit 300 acquires (captures) an image of the wall of a structure such as a tunnel.

The illumination unit 400 illuminates the wall of the structure with light to acquire an image of the wall of the structure using the camera unit 300.

The configuration of the slide unit 200 will be described. The slide unit 200 includes rails 210 and 220, a base 230, a guide shaft (an example of a shaft member) 240, guide shaft holding members 251 and 252, frames 261 and 262. The guide shaft 240 and the guide shaft holding members 251 and 252 constitute an example of a guide unit.

The camera unit 300 slides along the rail 210 fixed to the frame 261 so that the position of the camera unit 300 is changeable along the direction of arrow A in FIG. 1. Similarly, the illumination unit 400 slides along the rail 220 fixed to the frame 262 so that the position of the illumination unit 400 is changeable along the direction of arrow A in FIG. 1.

The rail 210 and the rail 220 are fixed to the frame 261 and the frame 262, respectively to be substantially parallel with each other.

The base 230 is secured to the frame 261 and the frame 262, and connects the frame 261 to the frame 262. The base 230 constitutes the base of the imaging device 100.

The guide shaft 240 is used to slide, for example, the camera unit 300 with stable accuracy. Examples of the guide shaft 240 include a metal round bar. The round bar as the guide shaft 240 is disposed such that the longitudinal direction of the round bar is substantially parallel to the direction of slide of the camera unit 300 and the illumination unit 400.

Each of the guide shaft holding members 251 and 252 serves to hold the guide shaft 240. The guide shaft 240 passes through the through holes provided in the guide shaft holding members 251 and 252, respectively, and is swaged onto the through holes, for example.

The detailed configuration and operation of the guide shaft 240 and its peripheral components will be described later.

In FIG. 1, the slide unit 200 slides both the camera unit 300 and the illumination unit 400. However, no limitation is intended therein.

Alternatively, for example, one unit (an example of a mechanical component) may slide the camera unit 300 and another unit (an example of another mechanical component) may slide the illumination unit 400.

The imaging device 100 is attached to, for example, a roof of a vehicle such that the direction of slide of the camera unit 300 intersects with the direction of travel (an example of the direction of movement of a mobile object) of a vehicle (an example of the mobile object). In other words, the direction of arrow A in FIG. 1 intersects with the direction of travel of the vehicle on which the imaging device 100 is mounted.

With this configuration, for example, the position of the camera unit 300 is changeable within a plane intersecting with the direction of travel of the vehicle.

The portion of the vehicle to which the imaging device 100 is attached is not limited to the roof. The imaging device 100 may be attached to a front hood or a rear hood of the vehicle. If the vehicle is a truck, the imaging device 100 may be attached to, for example, a loading platform.

When the imaging device 100 is attached to the roof of the vehicle, for example, any member such as a hook may be used to hold the imaging device 100, similarly to a ski carrier for a vehicle.

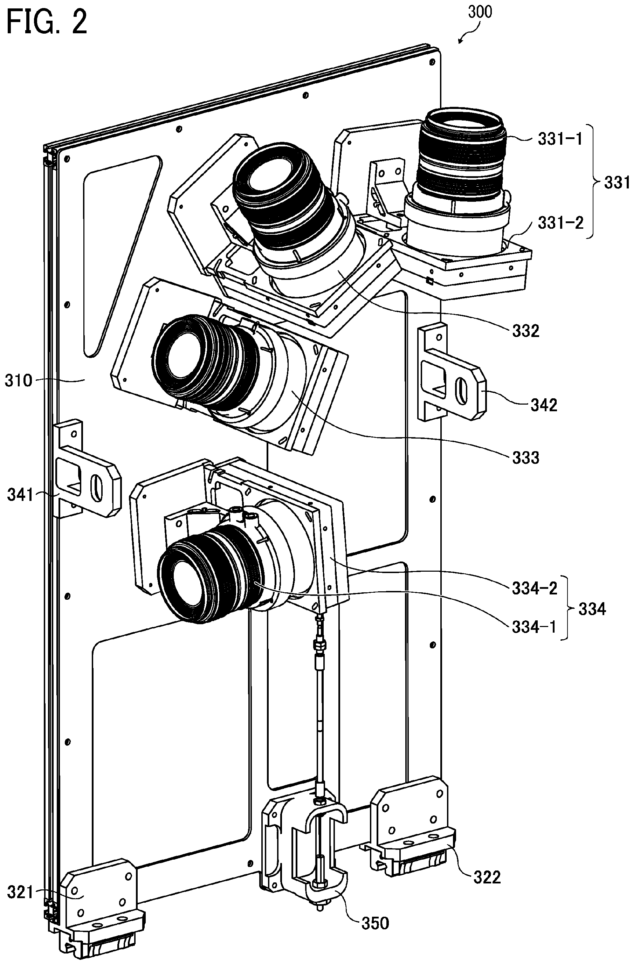

Next, the configuration of the camera unit 300 will be described with reference to FIG. 2.

The camera unit 300 includes a base plate 310, a rail connecting part 321, a rail connecting part 322, a camera 331, a camera 332, a camera 333, a camera 334, a shaft coupling part 341 (an example of a shaft coupling member on the image side) as a first shaft coupling part, a shaft coupling part 342, and an index plunger 350 (an example of a fixing means for fixing the image acquisition unit).

The rail connecting parts 321 and 322 serve to connect the rail 210 with a base plate 310.

Each of the rail connecting parts 321 and 322 has a shape of a letter "U" in a direction orthogonal to the axis of the rail 210. When the rail 210 is, for example, a double-headed rail, the rail connecting parts 321 and 322 are connected with the rail 210 such that one of the heads of the double headed rail is covered with the U-shaped part.

The rail connecting parts 321 and 322 have the identical shape and are connected with the rail 210 at two different positions in the axial direction of the rail 210. The rail connecting parts 321 and 322 are fixed to the base plate 310 so that the camera unit 300 is slidable in the axial direction of the rail 210, i.e., the direction of arrow A in FIG. 1.

The cameras 331 to 334 are fixed to the flat surface of the base plate 310.

For example, the camera 331 has a lens 331-1 and a line charge coupled device (CCD) 331-2 (an example of a line image sensor).

The lens 331-1 forms an image of an object in the direction of the optical axis of the lens 331-1, onto the imaging surface of the line CCD 331-2. The line CCD 331-2 generates a digital image of the object from the image formed onto the imaging surface of the line CCD 331-2.

The line CCD is a CCD in which pixels are arranged one-dimensionally (linearly). In the present embodiment, the camera 331 is fixed to the base plate 310 so that the direction in which the pixels are arranged intersects with the direction of travel of the vehicle. Each of the cameras 332 to 334 has the same configuration as that of the camera 331.

A tunnel, which is an example of a structure to be an object, has a semicircular cross section orthogonal to the direction of travel of the vehicle. In accordance with the shape of the cross section, as illustrated in FIG. 2, the cameras 331 to 334 are radially arranged such that the optical axes of the lenses of the cameras 331 to 334 intersects with the wall of the tunnel.

In other words, the cameras 331 to 334 are radially arranged on the flat surface of the base plate 310 such that the direction, in which each of the cameras 331 to 334 acquires an image, faces the wall of the tunnel.

A line image (one-dimensional image) of the tunnel wall is obtained along the shape of the tunnel by joining the line images obtained by the camera 331 to 334, in the direction in which the cameras 331 to 334 are arranged.

Then, the camera unit 300 acquires such line images while the vehicle is traveling, and further acquires an area image (two-dimensional image) by joining the line images in a direction orthogonal to the direction in which pixels are arranged in the line image.

In the present embodiment, four cameras are used, but no limitation is intended therein. In some embodiments, the number of cameras may be increased or reduced according to the size and conditions of the tunnel. Further, the imaging magnification, field of view, and F number of the lens 331-1 may be determined according to the photographing conditions.

In the present embodiment, the line CCD is used as the camera 331. However, no limitation is intended thereby. For example, the camera 331 may be an area CCD in which pixels are two-dimensionally arranged.

Alternatively, a complementary metal oxide semiconductor (CMOS) may be used as the camera 331 instead of the CCD.

The shaft coupling parts 341 and 342 are coupled with the guide shaft 240. The index plunger 350 serves to fix the camera unit 300 at a desired position along the sliding direction.

The detailed description of the configuration and operation of the shaft coupling parts 341 and 342 and the index plunger 350 will be given later.

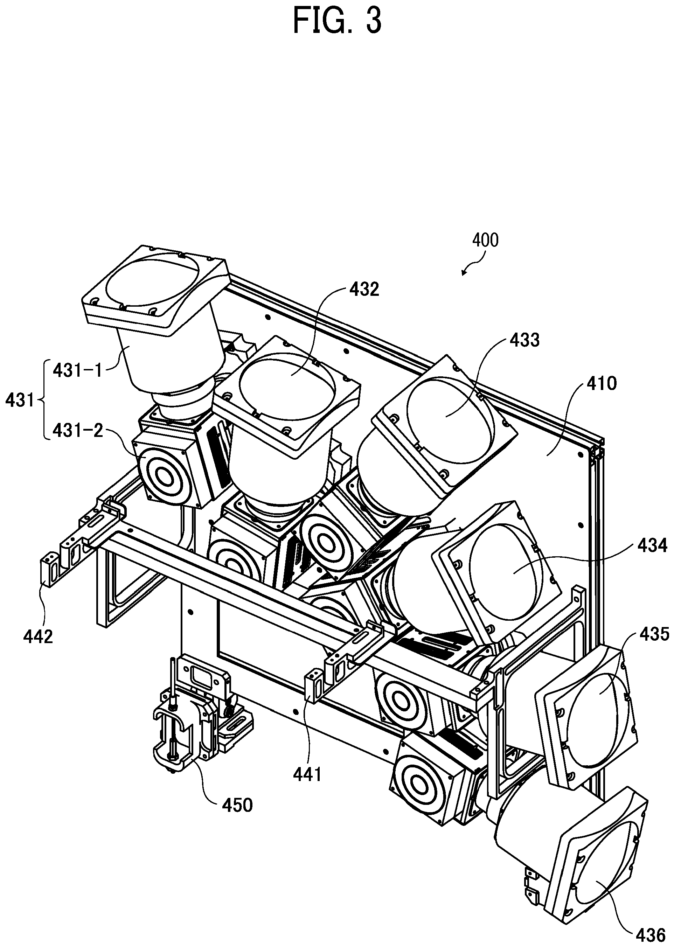

Next, the configuration of the illumination unit 400 is described with reference to FIG. 3.

The illumination unit 400 includes a base plate 410, a rail connecting part; illumination light sources 431, 432, 433, 434, 435, and 436, a shaft coupling part 441 (an example of a shaft coupling member on the illumination side) as a second shaft coupling part, a shaft coupling part 442, and an index plunger 450 (an example of an illumination unit fixing means for fixing the illumination unit).

The same relation between the rail 210 and the connecting parts 321 and 322 applies to the rail 220 and the rail connecting part in the illumination unit 400.

The illumination light sources 431 to 436 are fixed onto the flat surface of the base plate 410.

The illumination light source 431 includes, for example, a lens 431-1 and a light source 431-2.

The light source 431 - 2 illuminates an object in the direction of the optical axis of the lens 431-1 through the lens 431-1. Each of the illumination light sources 432 to 436 has the same configuration as that of the illumination light source 431. The light source 431-2 is, for example, a metal halide light or a light emitting diode (LED).

As described above, the tunnel has a semicircular cross section in the direction orthogonal to the direction of travel of the vehicle. In accordance with the shape of the cross section, as illustrated in FIG. 3, the illuminations light sources 431 to 436 are radially arranged such that the optical axes of the lenses of the illuminations light sources 431 to 436 intersects with the wall of the tunnel.

In other words, the illuminations light sources 431 to 436 are radially arranged on the flat surface of the base plate 410 to face the wall of the tunnel.

For example, the illumination unit 400 illuminates the wall of the tunnel with linear light that is parallel with the direction intersecting with the direction of travel of the vehicle, i.e., the direction in which pixels are arranged in the line CCD.

In the present embodiment, six illumination light sources are used, but no limitation is intended thereby. There is no need to dispose the same number of the illumination light sources as the number of the cameras. The number of the illumination light sources may be determined according to the conditions such as brightness. Further, the angles of view and F numbers of lenses may be determined according to desired photographing conditions.

In the present embodiment, the positions of the illumination light sources 431 to 436 are shifted little by little in the direction of the optical axis of the lens. Such a configuration prevents physical interference between the illumination light sources.

The shaft coupling parts 441 and 442 are coupled to the guide shaft 240. The index plunger 450 serves to fix the illumination unit 400 at a desired position along the sliding direction.

The detailed description of the configuration and operation of the shaft coupling parts 441 and 442 and the index plunger 450 will be given later.

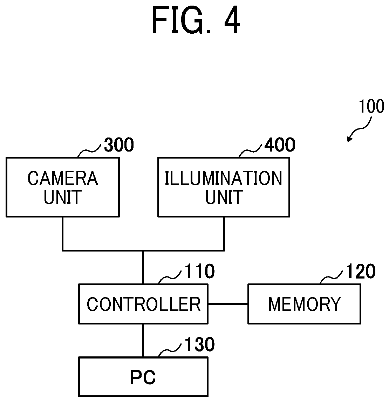

FIG. 4 is a block diagram of a hardware configuration of the imaging device 100.

The imaging device 100 includes the camera unit 300, the illumination unit 400, a controller 110, a memory 120, and a personal computer (PC) 130.

The controller 110 controls, for example, the exposure time and shutter speed of the CCD in the camera unit 300. Further, the controller 110 controls, for example, the emission intensity of the light sources in the illumination unit 400.

Further, the controller 110 obtains image data captured by the CCD of the camera unit 300, and outputs the image data to the memory 120.

The memory 120 stores the image data obtained by the controller 110.

The PC 130 has, for example, a central processing unit (CPU), a read only memory (ROM), a random access memory (RAM), and an interface (I/F).

For example, the PC 130 serves as an interface for a user to operate the imaging device 100. The PC 130 further serves to process the image data stored in the memory 120.

The image data processing involves a process of joining the line images acquired, for example, by the camera 331 while the vehicle is traveling, and a process of joining the line images acquired by the cameras 331 to 334.

As the PC 130, a notebook PC, a tablet, or the like may be used.

In the imaging device 100, the camera unit 300 and the illumination unit 400 are slidable by the slide unit 200 and fixed at two positions determined based on the length of a predetermined road structure in a direction intersecting with the direction of travel of the vehicle.

The length of the predetermined road structure is, for example, the width of a sidewalk (an example of a predetermined road structure) in a direction intersecting with the direction of travel of the vehicle.

In the present disclosure, the sidewalk is a road that a pedestrian passes through, and is a part of a road that is provided alongside a roadway or the like and that is structurally partitioned for pedestrian traffic. The width of the sidewalk varies according to the traffic of the pedestrian, but it is generally about 1.5 to 3 m.

For example, when the width of the sidewalk is 1.5 m, the interval between the two positions determined based on the width of the sidewalk may be set to 1.5 m. When the width of the sidewalk is, for example, 3 m and exceeds the width of the vehicle, the interval between the two positions determined based on the width of the sidewalk may be defined as the maximum width of the vehicle.

In addition to the sidewalks, when there is an audit trail or a roadside zone, the interval between the two positions determined based on the width of the sidewalk is set as the length of the difference between the width of the sidewalk and the width of the roadside zone or the difference between the sidewalk and the roadside zone.

For example, the camera unit 300 and the illumination unit 400 may be fixed at one of two positions determined based on the width of the sidewalk in a direction intersecting with the direction of travel of the vehicle, and an area image of a desired area of the tunnel wall is acquired.

Next, the camera unit 300 and the illumination unit 400 are fixed at the other position, and an area image of a desired area of the tunnel wall is acquired.

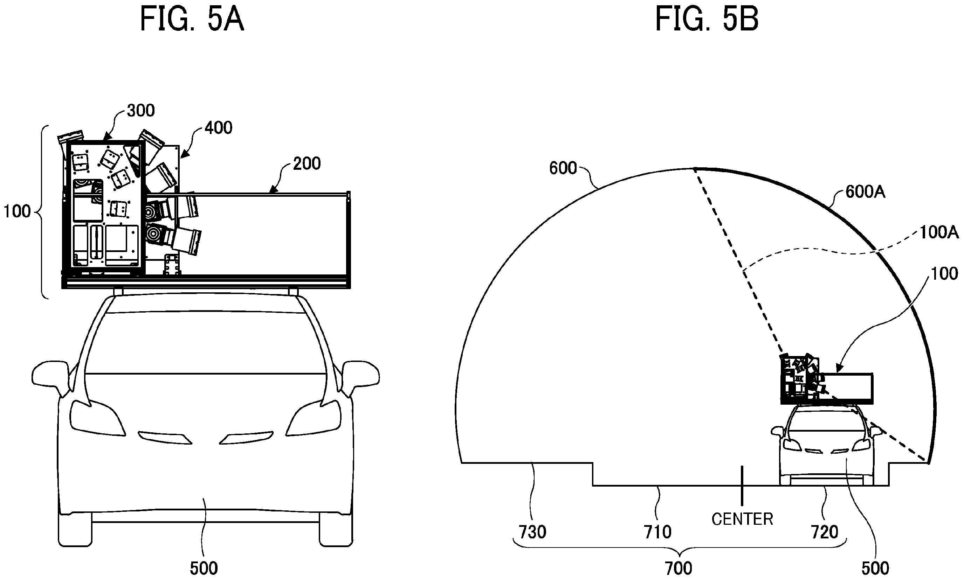

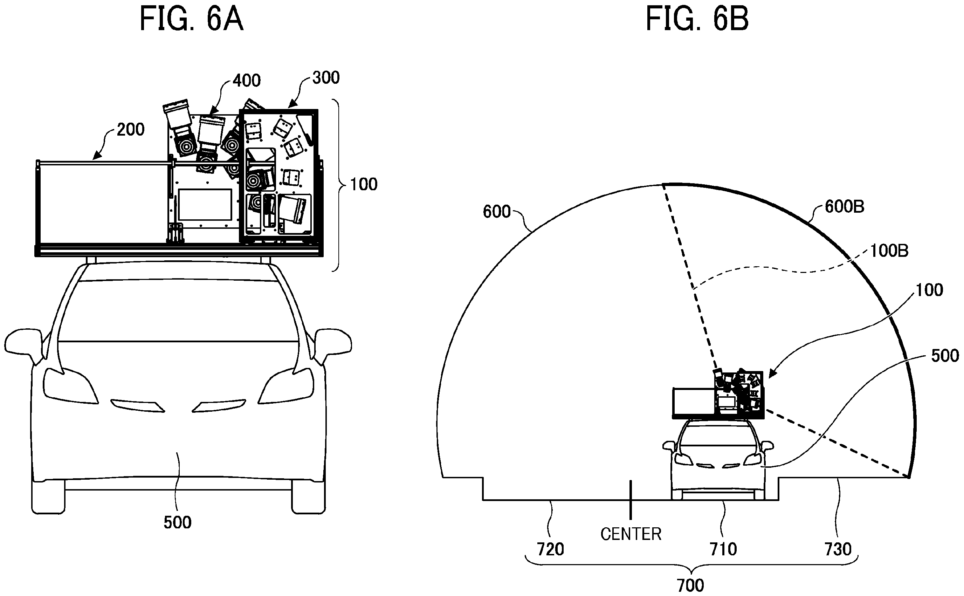

Next, the detailed description of a method for acquiring images at two positions is described below with reference to FIGs. 5 and 6.

In the following description, the expression "an image of the wall of the tunnel (tunnel wall) is acquired" means that the imaging device 100 photographs the wall of the tunnel 600.

FIGs. 5A and 5B are illustrations for explaining a photographing mode when a vehicle 500 is close to the wall of the tunnel 600 according to the first embodiment of the present disclosure.

In FIG. 5A, the vehicle 500 is observed from the direction of travel of the vehicle 500. The imaging device 100 is mounted on and fixed onto the roof of the vehicle 500.

The camera unit 300 and the illumination unit 400, which are attached to the slide unit 200 by the index plungers 350 and 450, respectively, are slid to the right end of the slide unit 200 in a direction orthogonal to the traveling direction.

FIG. 5B is an illustration of an example in which the vehicle 500 travels (moves) in the interior of the tunnel 600. In FIG. 5B, there is a lane 710 (an example of a return lane) on the left side and a lane 720 (an example of an outward lane) on the right side relative to the center of the road 700. In the lane 720, the vehicle 500 is traveling in the forward direction from the paper sheet on which FIG. 5B is drawn.

In this example, there is a sidewalk 730 on the lane 710 side, that is, on the opposite lane side of the vehicle 500. Since there is no sidewalk on the lane 720 side, the vehicle 500 is running at a position closer to the wall of the tunnel 600 on the vehicle 500 side, as compared to the case where there is a sidewalk.

The camera unit 300 and the illumination unit 400 are located at the right side of the slide unit 200 in the traveling direction, that is, are away from the wall of the tunnel 600 on the vehicle 500 side. The positions of the camera unit 300 and the illumination unit 400 in this case will be referred to as a position A hereinafter.

In FIG. 5B, a photographing range photographed by the imaging device 100 is indicated by broken line 100A. That is, the imaging device 100 photographs an area 600A indicated by the bold line, i.e., on the vehicle side relative to the broken line 100A.

As indicated by the bold line, in the present embodiment, the imaging device 100 acquires a photographed image of the tunnel wall including the boundary between the tunnel wall surface (covering portion) and the ground.

The imaging device 100 photographs a right half of the tunnel wall from the entrance to the exit relative to the drawing sheet of FIG. 5B while the vehicle 500 runs through the tunnel 600.

FIGs. 6A and 6B are illustrations for explaining a photographing mode when the imaging device 100 is away from the wall of the tunnel 600 according to the first embodiment of the present disclosure. The description of the parts in FIGs. 6A and 6B overlapping with FIGs. 5A and 5B will be omitted, and the differences will be described.

In FIG. 6A, the vehicle 500 is observed from the direction of travel of the vehicle 500.

The camera unit 300 and the illumination unit 400, which are fixed to the slide unit 200 by index plungers 350 and 450, respectively, are slid to the left end of the slide unit 200 in the traveling direction.

FIG. 6B is an illustration of an example in which the vehicle 500 is running in the interior of the tunnel 600. In the lane 710, the vehicle 500 is running in the forward direction from the drawing sheet.

In this example, the sidewalk 730 is in the lane 710, that is, in the lane on which the vehicle 500 runs. That is, in FIG. 6B, the vehicle 500 is running on the opposite lane in the opposite direction of those in FIG, 5B.

As compared with the case where there is no sidewalk on the driving lane side, the vehicle 500 travels keeping a distance from the wall of the tunnel 600 on the vehicle 500 side.

The camera unit 300 and the illumination unit 400 are located on the left end of the slide unit 200 in the traveling direction, that is, at positions close to the wall of the tunnel 600 on the vehicle side. The positions of the camera unit 300 and the illumination unit 400 in this case will be referred to as a position B hereinafter.

In FIG. 6B, a photographing range photographed by the imaging device 100 is indicated by broken line 100B. That is, the imaging device 100 photographs an area 600B indicated by the bold line, i.e., on the vehicle side relative to the broken line 100B.

The imaging device 100 photographs a right half of the tunnel wall from the entrance to the exit relative to the drawing sheet of FIG. 6B while the vehicle 500 runs through the tunnel 600.

The images of the wall photographed in the manner of FIG. 5 are joined with the images of the wall surface photographed in the manner of FIG. 6, to acquire an image of the entire tunnel wall from the entrance to the exit of the tunnel 600.

Preferably, the photographing ranges of the images of the cameras 331 to 334 of the camera unit 300 overlap with each other. To form a developed image by joining the images, it is desirable that the tunnel wall on the non-sidewalk side in FIG. 5 and tunnel wall on the sidewalk side in FIG. 6 be photographed so that the same ceiling areas overlap with each other. When the wall of the tunnel 600 is photographed by traveling back and forth between the entrance and exist of the tunnel 600, for example, the photographed area when traveling forth and the photographed area when traveling back overlap with each other in the direction intersecting with the wall of the tunnel 600 is prevented from being unphotographed.

According to the present embodiment, the position at which the camera unit 300 and the illumination unit 400 are fixed is switched between the position A and the position B according to the presence or absence of a sidewalk. With this configuration, the distance between the wall on the vehicle 500 side and the imaging device 100, i.e., the distance to the object can be substantially constant.

As a result, regardless of the presence or absence of a sidewalk, it is possible to perform photographing with common photographing conditions such as focus state, photographing magnification, and brightness of illumination.

Further, in such a configuration, as the right-half and left-half wall images are acquired under the common photographing conditions, image processing to join the images is easily performed.

As a result, photographing can be performed without taking time and work to adjust focus of the camera or measure the cross-sectional shape of the structure.

In addition to the above, the following effects can be obtained.

For example, when focus adjustment of the camera is performed while the vehicle is running, there is a possibility that the adjustment mechanism may be broken due to irregular movement such as vibration accompanying the running, sudden braking, rapid acceleration, or the like.

In addition, if a cam mechanism adopting a cam groove and a cam follower is used as the adjusting mechanism, the cam follower gradually moves in the cam groove due to vibration caused by running of the vehicle, and the focus state changes. Furthermore, if dust in the tunnel enters the inside of the mechanism, malfunction may be caused.

According to the present embodiment, focus adjustment or the like of the camera is not performed while the vehicle is traveling, so the possibility of these failures can be reduced.

Further, as the slide mechanism is simple, device cost can be advantageously reduced. Further, there is no need to perform complicated image processing such as detection of the contrast of the texture on the object, to adjust the focus. Hence, the operation cost can be reduced.

Also, it is difficult to detect the contrast itself when traveling in a dark tunnel with few features. If it is attempted to perform contrast detection with sufficient accuracy, an expensive image sensor with high sensitivity is required.

According to the present embodiment, such technical difficulty and cost of the image sensor can be reduced.

Furthermore, in the case of using a line image sensor in a camera unit, for example, only images corresponding to one line can be obtained, so that it is difficult to adjust the focus using a photographed image.

In the present embodiment, since a photographed image is not used for focus adjustment, a line image sensor can be used for the camera unit. As a result, for example, photographing with high illumination efficiency as will be described later becomes possible.

In addition to the above, the following effects can be obtained.

For example, the camera unit 300 and the illumination unit 400 are assumed to be placed at positions relatively shifted from the center of the tunnel 600 in photographing. It should be noted that the center of the tunnel 600 refers to the substantially center of the semicircular cross section of the tunnel 600.

In this case, the photographing conditions such as the photographing magnification significantly differ between the image of the wall near the ceiling of the tunnel 600 (for example, the image acquired by the camera 331 in FIG. 2) and the image of the wall near the ground of the tunnel 600 (for example, the image acquired by the camera 334 in FIG. 2). As a result, the image resolution significantly differs between the image near the ceiling and the image near the ground of the tunnel 600.

In order to avoid such a trouble, the method is used in which the wall of the tunnel is photographed while the vehicle is traveling in the center of the road in disregard of the lane, so that the distance to the wall of the tunnel becomes substantially constant (For example, see JP-A-2011-095222).

However, this method might cause collision with an oncoming vehicle in photographing, and necessitates photographing at night in which there is less vehicle traffic or block of the road.

Further, if a median strip is provided on the road in the tunnel, photographing by using such a method is impossible.

On the other hand, according to the present embodiment, the camera unit 300 and the illumination unit 400 can be brought close to the center of the tunnel 600 when the vehicle 500 is near or away from the wall of the tunnel 600. Thus, the difference in photographing conditions can be reduced between areas in the wall of the tunnel.

The configuration according to the present embodiment can avoid a problem that image resolution differs between an area near the ceiling and an area near the ground of the tunnel 600 in photographing while traveling on the originally intended lane without, e.g., closing the road to vehicles.

In the present embodiment, the case where the slide unit 200 is moved in the direction of arrow A in FIG. 1. However, no limitation is intended thereby. Alternatively, the slide unit 200 may be moved in any direction within a plane intersecting with the direction of travel of the vehicle 500.

In the present embodiment, the camera unit 300 and the illumination unit 400 are fixed at two different positions in the direction of arrow A in FIG. 1, by the slide unit 200. However, no limitation is intended thereby.

That is, the camera unit 300 and the illumination unit 400 may be fixed at two different positions within the plane intersecting with the direction of travel of the vehicle, in the direction facing the wall of the tunnel 600.

Hereinafter, a supplementary description of the direction facing the wall of the tunnel will be given. As described above, the tunnel has a semicircular cross section orthogonal to the direction of travel of the vehicle. Thus, for example, the wall near the ground faces the lateral direction (horizontal direction) of the tunnel, and the wall near the ceiling faces vertically downward.

The "direction facing the wall of the tunnel" means a direction facing a wall that differs in orientation depending on a position in the wall. For example, the "direction facing the wall of the tunnel" near the ground is a substantially horizontal direction. On the other hand, the "direction facing the wall of the tunnel" near the ceiling is a substantially vertical upward direction.

Next, the configuration and operation of the guide shaft 240 according to the present embodiment will be described in detail.

The camera unit 300 and the illumination unit 400 are separate components and slide independently of each other. Therefore, for example, when the guide shaft 240 is not included in the imaging device 100, there is a possibility that when sliding, each of the camera unit 300 and the illumination unit 400 independently causes motions such as pitching, yawing, rolling, and the like irregularly.

Further, when the imaging device 100 is attached/detached from/to the vehicle, the relative position or posture (hereinafter referred to as "position/posture") of the camera unit 300 and the illumination unit 400 might change.

Further, each position/posture of the camera unit 300 and the illumination unit 400 might change due to vibration during running of the vehicle or due to deformation of members such as the frames 261 and 262 and the base plates 310 and 410 caused by, for example, temperature.

If such a change of the positions and postures occurs, the illumination light does not appropriately hit the photographing area of the camera unit 300. As a result, photographing fails due to a lack of brightness.

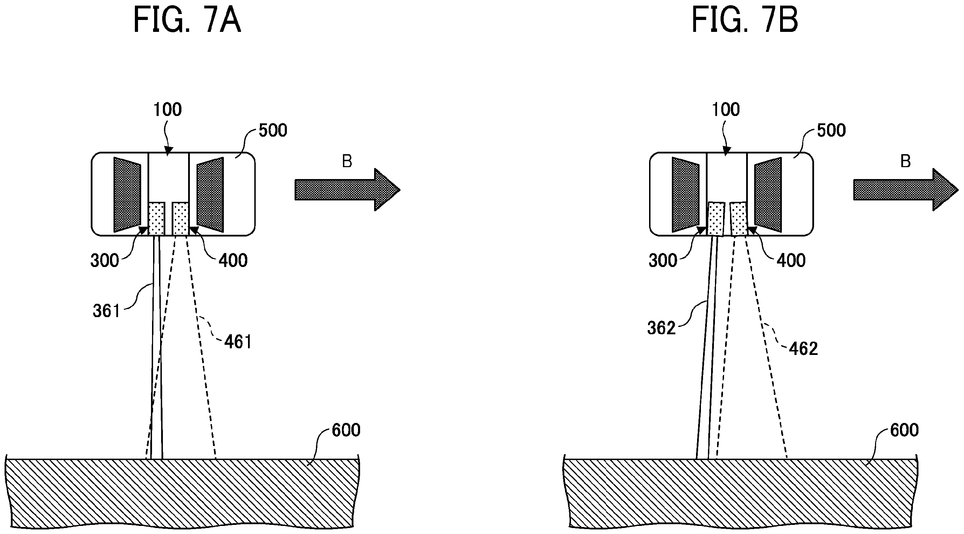

For example, FIGs. 7A and 7B are illustrations for explaining the case in which there is a change in the relative position/posture between the camera unit 300 and the illumination unit 400 and the illumination light fails to appropriately hit a photographing area of the camera unit 300.

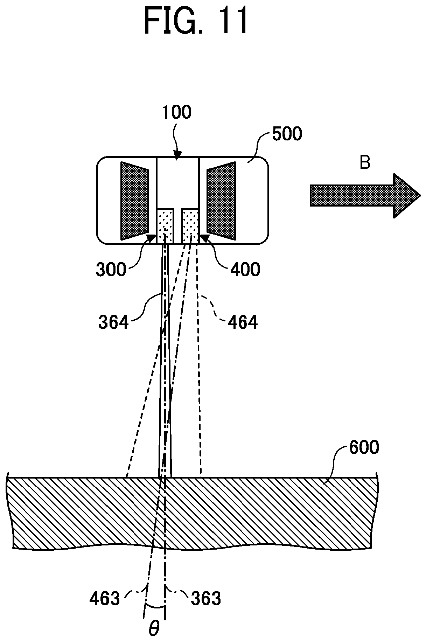

FIG. 7A is an illustration in which there is no change in the relative position/posture between the camera unit 300 and the illumination unit 400. Further, FIGs. 7A and 7B are schematic views in which a vehicle 500 runs in the direction of arrow B as viewed from the above. In Europe, the drivers keep to the right side of the road, so an image of the structure (tunnel wall) on the right side of the vehicle in the traveling direction is captured and measured with the camera as illustrated in FIGs. 7A, 7B, and 11.

An area where the photographing range of the camera unit 300 intersects with the wall of the tunnel 600 corresponds to a photographing area of the camera unit 300 on the wall.

An area where the wall of the tunnel 600 intersects with the illumination range 461 corresponds to the illumination area on the wall by the illumination unit 400.

In FIG. 7A, as there is no change in relative position/posture between the camera unit 300 and the illumination unit 400, the photographing area of the camera unit 300 and the illumination area of the illumination unit 400 overlap with each other. That is, the illumination light properly impinges on the photographed area.

FIG. 7B is an illustration in which there is a change in the relative position/posture between the camera unit 300 and the illumination unit 400.

In FIG. 7B, the postures of the camera unit 300 and the illumination unit 400 are independently changed. As a result, there is a change in positions/postures of the photographing range 362 and the illumination range 462 from those in FIG. 7A, so that the photographing area and the illumination area on the wall of the tunnel 600 do not overlap.

That is, with such a change in the relative postures of the cameral unit 300 and the illumination unit 400, the illumination light fails to hit the photographing area.

Particularly in the present embodiment, for example, a line CCD is used as the image sensor to reduce the photographing range (area) in the direction of travel of the vehicle 500. In this case, the illumination light is merely focused on a narrow (small) area, so that a high illumination efficiency is obtained. As a result, a sufficient amount of light is favorably obtained in the interior of the dark tunnel.

However, on the other hand, as the photographing area in the direction of travel of the vehicle 500 is small, the illumination light might fail to hit the photographing area of the camera unit 300 with a change in the relative position/posture between the camera unit 300 and the illumination unit 400.

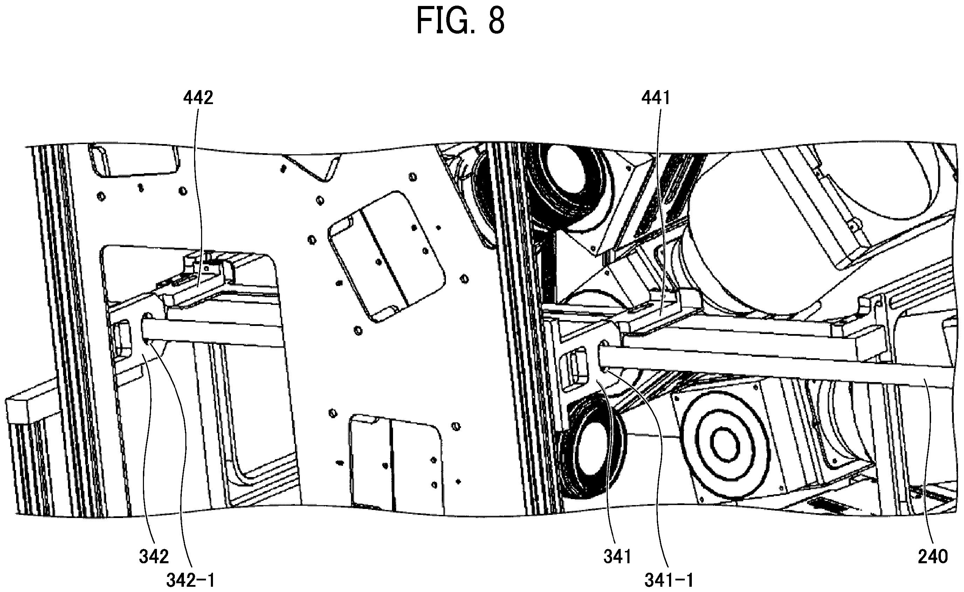

To avoid such a situation, the imaging device 100 according to the present embodiment includes the guide shaft 240. The detailed description of the use of the guide shaft 240 is given below with reference to FIG. 8.

In FIG. 8, the guide shaft 240 is held by the guide shaft holding members 251 and 252.

The shaft coupling parts 341 and 342 are fixed to the base plate 310 of the camera unit 300. The shaft coupling parts 341 and 342 have through holes 341-1 and 342-1, respectively.

The guide shaft 240 is passed through the through holes 341-1 and 342-1, the guide shaft 240 and the camera unit 300 are coupled to each other.

Similarly, the guide shaft 240 is passed through the through holes of the shaft coupling parts 441 and 442, so that the guide shaft 240 is couple to the illumination unit 400.

The camera unit 300 and the illumination unit 400 are configured to slide while being coupled to the guide shaft 240, respectively. That is, the camera unit 300 and the illumination unit 400 are capable of sliding using a common guide member.

With such a configuration, when there is a change in position/posture of either one of the camera unit 300 and the illumination unit 400, the other also change in position/posture with the change.

In other words, the camera unit 300 and the illumination unit 400 can slide or stand still while maintaining the relative position/posture between the camera unit 300 and the illumination unit 400.

As a result, any changes in the relative position/posture between the camera unit 300 and the illumination unit 400 can be reduced or eliminated so as to enable the illumination light to appropriately hit the photographing area.

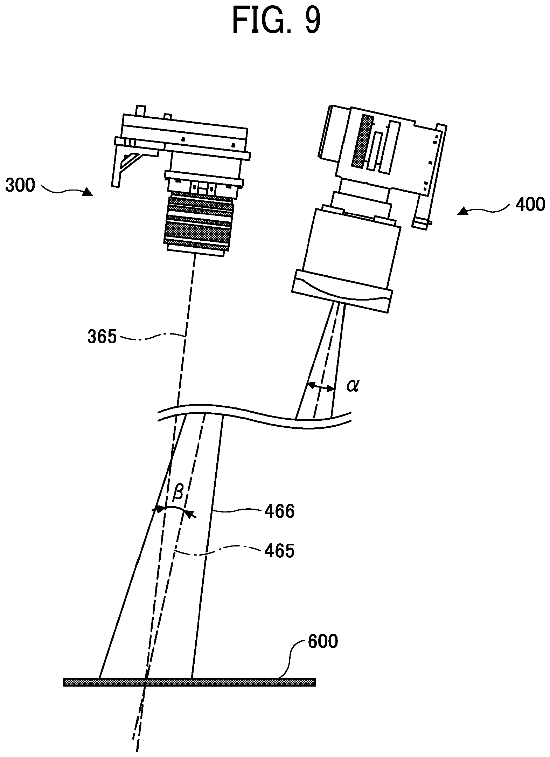

FIG. 9 is an illustration of the photographing area of the camera unit 300 and the illumination area of the illumination unit 400 when the camera unit 300 and the illumination unit 400 are tilted with respect to the wall of the tunnel 600.

In FIG. 9, the illumination unit 400 illuminates the wall of the tunnel 600 with illumination light 466 that is divergent light having the optical axis 465. The light distribution angle (divergence angle) α of the illumination light 466 is, for example, 1.65 degrees. The camera unit 300 photographs the wall of the tunnel 600. The optical axis 365 is the optical axis of the camera unit 300.

For example, when there is a change in positions of the camera unit 300 and the illumination unit 400 due to, for example, the meandering operation of the vehicle 500, the camera unit 300 and the illumination unit 400 sometimes are individually tilted with respect to the wall in the tunnel 600 as illustrated in FIG. 9. In this case as well, the relative position/posture between the camera unit 300 and the illumination unit 400 is maintained so that the photographing area of the camera unit 300 and the illumination area of the illumination unit 400 can be kept overlapping each other as illustrated in FIG. 9. As described above, even with any change in the position of the camera unit 300 and the illumination unit 400 due to, e.g., the meandering operation of the vehicle 500, the photographing area of the camera unit 300 can be appropriately illuminated by the illumination unit 400.

Although the cases where the line CCD is particularly used are described above, the same effects can be obtained even when other types of CCDs such as an area CCD is used.

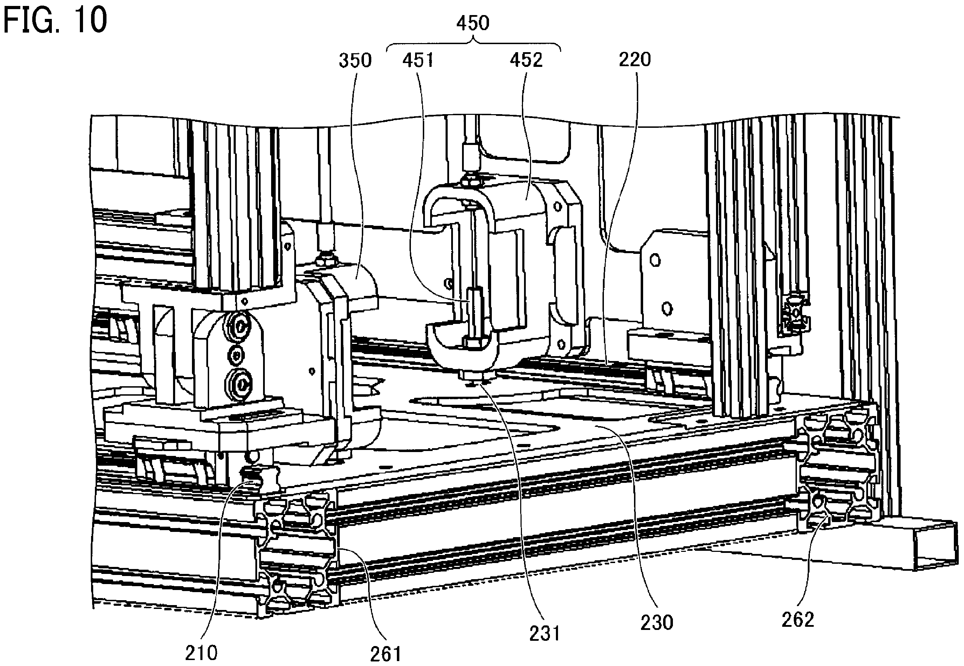

Next, the configuration and operation of the index plungers 350 and 450 according to the present embodiment will be described in detail with reference to FIG. 10.

In FIG. 10, the index plunger 350 is fixed to the flat surface of the base plate 310 of the camera unit 300. Further, the index plunger 450 is fixed to the flat surface of the base plate 410 of the illumination unit 400.

As described above, the camera unit 300 slides on the rail 210, and the illumination unit 400 slides on the rail 220.

As the index plungers 350 and 450 have the same configuration and operation, the index plunger 450 will be described as a representative example.

The index plunger 450 has a plunger 451 and a plunger holder 452.

The plunger 451 has a pin in the form of a round bar projecting to the ground side, a spring that gives the pin an urging force to the ground side, and a spring pressing member that presses the pin and the spring. The plunger holder 452 holds the plunger 451.

Meanwhile, the base 230 of the slide unit 200 has a fitting hole 231 that fits with the pin at a position where the illumination unit 400 is desired to be fixed in the direction in which illumination unit 400 slides.

That is, at a position where the fitting hole 231 is not provided, when the illumination unit 400 slides, the pin hits the base 230 and the illumination unit 400 is not fixed onto the base 230.

When the illumination unit 400 slides to the position where the fitting hole 231 is provided, the pin projects toward the fitting hole 231 by the urging force of the spring and fits into the fitting hole 231. As a result, the illumination unit 400 can not slide. That is, the illumination unit 400 is fixed onto the base 230.

When the illumination unit 400 is released from the base 230 to be caused to slide again, for example, a fixing release mechanism is manually operated to release the fixation.

In the present embodiment, the base 230 has fitting holes provided at positions corresponding to the position A and the position B in the sliding direction, respectively. With such a configuration, the illumination unit 400 can be fixed to two different positions in a plane intersecting with the direction of travel of the vehicle 500.

Similarly, the camera unit 300 can also be fixed by the index plunger 350 at two different positions in a plane intersecting with the direction of travel of the vehicle 500.

In the present embodiment, the cases are described where the illumination unit 400 fits into the fitting hole 231 provided in the base 230 to fix the illumination unit 400 to the base 230. However, no limitation is intended thereby.

Alternatively, a pin may be fitted into and fixed by a fitting hole provided in, for example, the frame 262 or the rail 220. Alternatively, for example, the illumination unit 400 may be caused to abut on the base 230 to be positioned, and fixed by clamping with, for example, bolts.

Next, an aspect and advantageous effects thereof will be described with respect to FIG. 11, in which the illumination direction of the illumination light of the illumination unit 400 is tilted with respect to the photographing direction (image acquisition direction) of the camera unit 300 in this embodiment.

FIG. 11 is an illustration in which the vehicle 500 travels in the direction arrow B as viewed from the above, similarly to FIGs. 7A and 7B.

The camera unit 300 photographs the wall of the tunnel 600 in the photographing direction 363 that corresponds to the direction of the optical axis of the lens of the camera unit 300. Further, the camera unit 300 photographs the photographing range 364 on the wall of the tunnel 600. An area where the photographing range 364 of the camera unit 300 intersects with the wall of the tunnel 600 corresponds to the photographing area 364 of the camera unit 300 on the wall.

The illumination unit 400 emits light in the illumination direction 463 that corresponds to the direction of the optical axis of the lens of the illumination unit 400. The illumination unit 400 illuminates the illumination range 464 of the wall. An area where the wall of the tunnel 600 intersects with the illumination range 464 corresponds to the illumination area of the illumination unit 400 on the wall.

As described above, when there is a change in the relative position/posture between the camera unit 300 and the illumination unit 400 due to vibration caused by the driving of the vehicle 500, the illumination light might fail to hit the photographing area of the camera unit 300 so that photographing fails due to a lack of brightness.

To avoid such a situation, in the present embodiment, the illumination direction 463 of the illumination unit 400 is tilted with respect to the photographing direction 363 of the camera unit 300 to illuminate the photographing range 364 of the wall of the tunnel 600. In the example of FIG. 11, the illumination unit 400 illuminates the wall of the tunnel 600 at a tilt angle θ.

In the configuration according to the present embodiment, the illumination direction 463 of the illumination unit 400 is tilted in such a manner to define the photographing area of the camera unit 300 in an area closer to the center of the illumination area of the illumination unit 400. As a result, the illumination light can hit the photographing area.

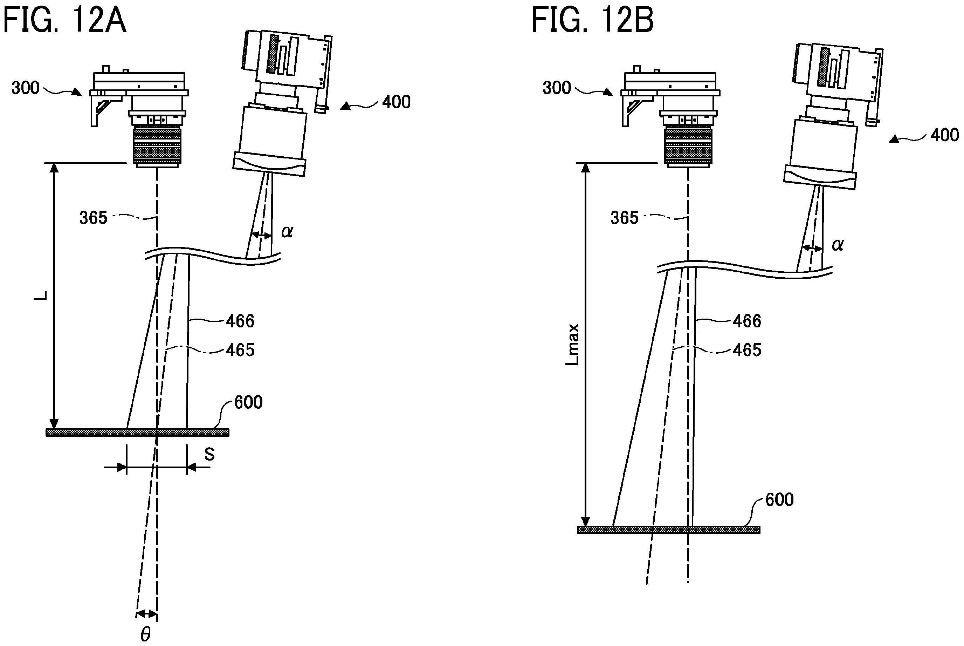

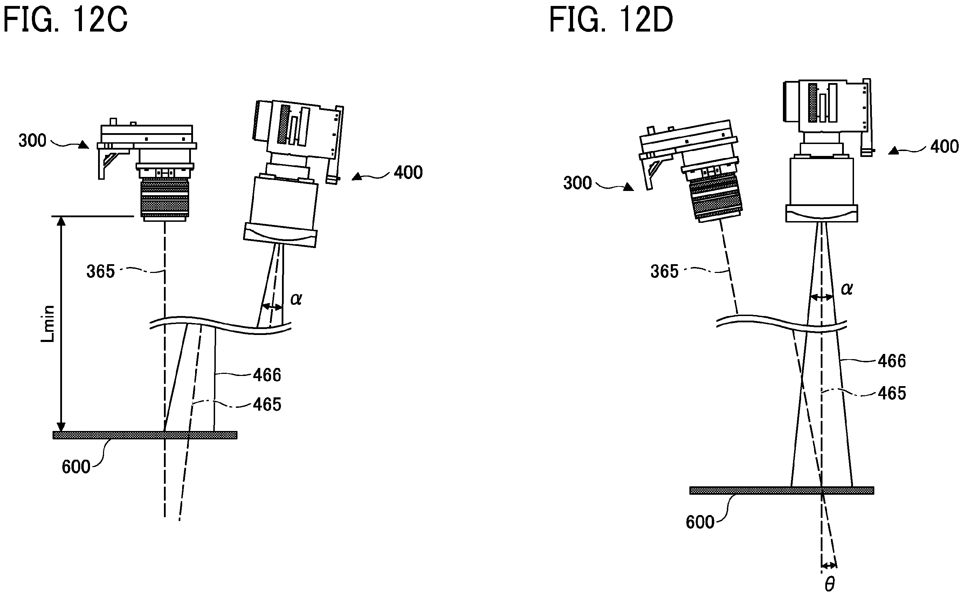

FIGs. 12A, 12B, 12C, and 12D are illustrations of the relations of the tilt angle θ formed by the optical axis 365 of the camera unit 300 and the optical axis 465 of the illumination unit 400, the light distribution angle α of the illumination light, the distance L from the camera unit 300 to the wall of the tunnel 600, and the illumination area S.

FIG. 12A is an illustration of the relations of the camera unit 300, the illumination unit 400, and the wall of the tunnel 600. In FIG. 12A, the optical axis 365 of the camera unit 300 is perpendicular to the wall of the tunnel 600, and the optical axis 465 of the illumination light 466 from the illumination unit 400 is tilted at the tilt angle θ with respect to the optical axis 365 of the camera unit 300. Note that the expression "perpendicular" does not mean strictly 90 degrees, and may be slightly deviated from 90 degrees depending on the inclination of the wall of the tunnel 600 or meandering of the vehicle 500. The same applies to hereinafter.

The illumination light 466 illuminates the wall of the tunnel 600 at the light distribution angle α. It is assumed that the distance L from the camera unit 300 to the wall of the tunnel 600 ranges from Lmin to Lmax due to, for example, meandering operation of the vehicle 500. The illumination area S is an illumination area illuminated with the illumination light 466 on the tunnel 600. The illumination light is light that illuminates a circular area, and illumination area S refers to the diameter of this circular area. However, the illumination light is not limited to the light that illuminates the circular area, and may be light that illuminates a rectangular area or light that illuminates an elliptical area.

FIG. 12B is an illustration in which the photographing area of the camera unit 300 overlaps the illumination area of the illumination unit 400 and the vehicle 500 is the furthest from the wall of the tunnel 600.

For example, when the tilt angle θ is 2.5 degrees and the light distribution angle α is 1.65 degrees, the illumination area S is 330 millimeters (mm). In this case, when the distance from the camera unit 300 to the wall of the tunnel 600 is 5200 mm, the optical axis 365 of the camera unit 300 is located at the extreme end (the rightmost end in FIG. 12B) of the illumination area S on the wall of the tunnel 600. That is, the distance of 5200 mm from the camera unit 300 to the wall of the tunnel 600 is an example of the maximum distance Lmax to enable the photographing area of the camera unit 300 and the illumination area of the illumination unit 400 to be kept overlapping with each other.

FIG. 12C is an illustration in which the photographing area of the camera unit 300 overlaps the illumination area of the illumination unit 400 and the vehicle 500 is the closest to the wall of the tunnel 600.

For example, same as described above, when the tilt angle θ is 2.5 degrees and the light distribution angle α is 1.65 degrees, the illumination area S is 330 mm. In this case, when the distance from the camera unit 300 to the wall of the tunnel 600 is 2600 mm, the optical axis 365 of the camera unit 300 is located at the extreme end (the leftmost end in FIG. 12C) of the illumination area S on the wall of the tunnel 600. That is, the distance of 2600 mm from the camera unit 300 to the wall of the tunnel 600 is an example of the minimum distance Lmin to enable the photographing area of the camera unit 300 and the illumination area of the illumination unit 400 to be kept overlapping with each other.

In the above description, the cases where the illumination unit 400 illuminates the wall of the tunnel 600 with the divergent light having the light distribution angle α are described. However, no limitation is intended thereby. Alternatively, the illumination unit 400 may illuminates the wall of the tunnel 600 with parallel light. Illuminating the divergent light enables the size of the illumination area on the wall of the tunnel 600 to change according to the distance from the illumination unit 400 to the wall of the tunnel 600.

For example, as the distance L from the illumination unit 400 to the wall of the tunnel 600 increases, a larger area can be illuminated. On the other hand, when the parallel light is illuminated, a constant area can be illuminated on the wall of the tunnel 600 irrespective of the distance L from the illumination unit 400 to the wall of the tunnel 600.

In the above description, the optical axis 365 of the camera unit 300 is perpendicular to the wall of the tunnel 600, and the optical axis 465 of the illumination unit 400 is tilted with respect to the optical axis 365 of the camera unit 300. However, no limitation is intended thereby. For example, as illustrated in FIG. 12D, the optical axis 465 of the illumination unit 400 is perpendicular to the wall of the tunnel 600, and the optical axis 365 of the camera unit 300 is tilted with respect to the optical axis 465 of the illumination unit 400.

FIG. 12D is an illustration of an example in which the optical axis 365 of the camera unit 300 is tilted at the tilt angle θ with respect to the optical axis 465 of the illumination unit 400. In other words, the optical axis 465 of the illumination unit 400 and the optical axis 365 of the camera unit 300 may be tilted at the tilt angle θ relative to each other.

By tilting the optical axis 465 of the illumination unit 400 and the optical axis 365 of the camera unit 300 relative to each other in such a manner, the illumination unit 400 can emit light to the photographing area of the camera unit 300. With such a configuration, for example, when the photographing area that is horizontal to the wall of the tunnel 600 (the photographing field of view in the horizontal direction) on the wall of the tunnel 600 is narrow, the photographing area of the camera unit 300 can be appropriately illuminated with light from the illumination unit 400.

Further, the configuration that maintains the relative position/posture between the camera unit 300 and the illumination unit 400 using the guide shaft 240 may be combined with the configuration that illuminates the wall by tilting the illumination direction, which can exhibit more remarkable advantageous effects.

In other words, for example, even when a line CCD is used as the image sensor and photographing is performed with good illumination efficiency, the illumination unit 400 can be more remarkably prevented from failing to appropriately illuminate the photographing area of the camera unit 300 with illumination light.

In addition, even when there is a change in the distance between the tunnel wall and the vehicle 500 due to meandering of the vehicle or the tunnel size differs, the illumination unit 400 can be prevented from failing to appropriately illuminate the photographing area of the camera unit 300 with illumination light.

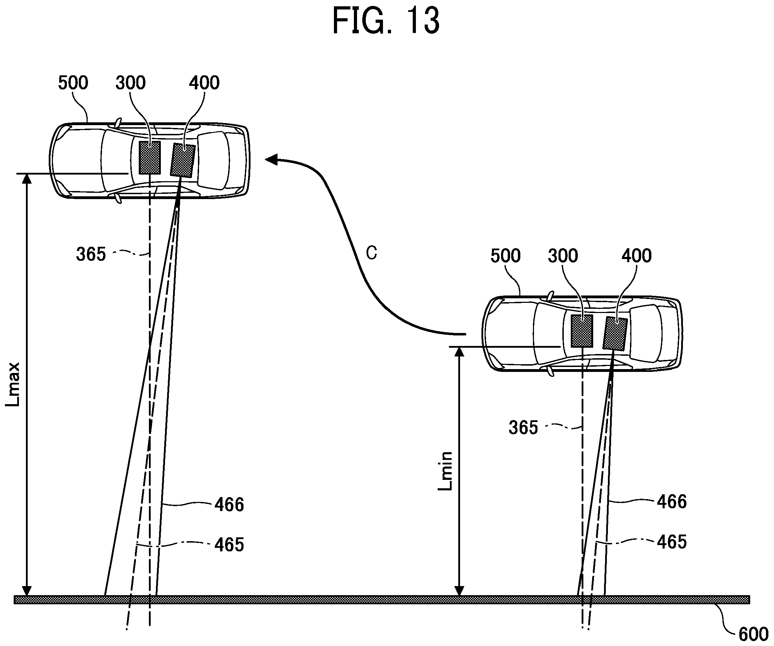

FIG. 13 is an illustration of the relations between meandering of the vehicle 500, the photographing area of the camera unit 300, and the illumination area of the illumination unit 400. The vehicle 500 travels meandering in the direction indicated by arrow C in FIG. 13.

As illustrated in FIG. 13, when the distance Lmax from the camera unit 300 to the wall of the tunnel 600 is 5200 mm, the optical axis 365 of the camera unit 300 is located at the extreme end of the illumination area S (the rightmost end in FIG. 13) on the wall of the tunnel 600. In other words, the optical axis 365 of the camera unit 300 is positioned at one limit that enables the photographing area of the camera unit 300 and the illumination area of the illumination unit 400 to be kept overlapping each other.

On the other hand, as illustrated on the right side of FIG. 13, when the distance Lmin from the camera unit 300 to the wall of the tunnel 600 is 2600 mm, the optical axis 365 of the camera unit 300 is located at the extreme end of the illumination area S (the leftmost end in FIG. 13) on the wall of the tunnel 600. In other words, the optical axis 365 of the camera unit 300 is positioned at the other limit that enables the photographing area of the camera unit 300 and the illumination area of the illumination unit 400 to be kept overlapping each other.

As can be seen from the above description, under the conditions that the angle θ is 2.5 degrees and the light distribution angle α is 1.65 degrees (see FIGs. 12A and 12B), the vehicle 500 is permitted to meander within the distance L from the camera unit 300 to the wall of the tunnel 600 that ranges from 2600 mm to 5200 mm.

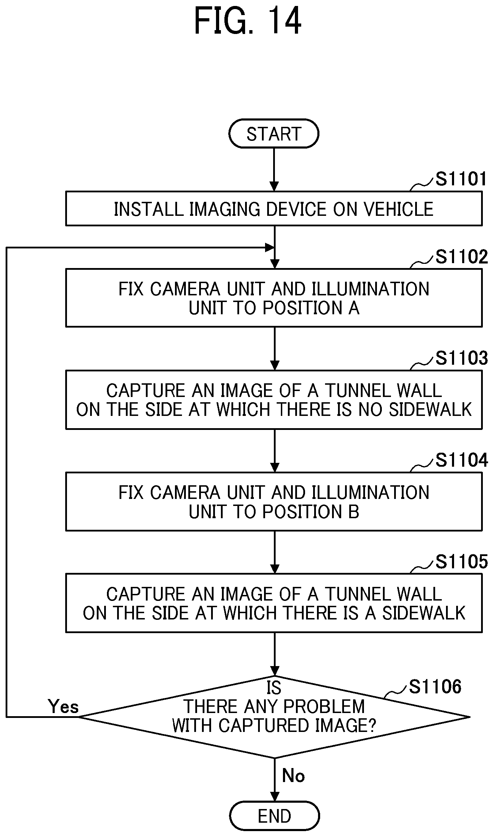

Next, the photographing (image-capturing) operations executed by the imaging device 100 according to the present embodiment will be described with reference to FIG. 14.

First, in step S1101, the imaging device 100 is attached to the vehicle 500.

Next, the camera unit 300 and the illumination unit 400 are fixed to the position A by the slide unit 200 (step S1102). In this case, for example, a user manually slides and fixes the camera unit 300 and the illumination unit 400 at the position A.

Then, the imaging device 100 photographs the area 600A of the wall on the side where there is no sidewalk 730 in the tunnel 600 while the vehicle 500 travels from the entrance to the exit of the tunnel 600 (step S1103).

In this case, the imaging device 100 starts photographing when the vehicle 500 enters the tunnel 600 through the entrance. For example, the user gives instructions to start photographing.

When the vehicle 500 reaches the exit of the tunnel 600, the imaging device 100 stops photographing. For example, the user gives instructions to stop photographing.

Up to this time, image data of half of the entire wall of the tunnel 600 is stored in the memory 120.

Subsequently, the camera unit 300 and the illumination unit 400 are fixed to the position B by the slide unit 200 (step S1104). In this case, for example, the user manually slides and fixes the camera unit 300 and the illumination unit 400 at the position B.

Then, the imaging device 100 photographs the area 600B of the wall on the side where there is a sidewalk 730 in the tunnel 600 while the vehicle 500 travels from the entrance to the exit of the tunnel 600 in the direction opposite of the direction in step S1103 (step S1105). Same as the above, the user gives instructions to start/stop photographing, for example.

As a result, the imaging device 100 captures images of the remaining half of the entire wall of the tunnel 600, and the image data is stored in the memory 120.

The user checks whether there is any problem with the captured image (step S1106). If there is no problem (NO in step S1106), the photographing processing ends. When there is a problem (YES in step S1106), the process returns to step S1102 to photograph the wall again.

This configuration enables the wall of a structure such as a tunnel to be photographed without taking time and work to adjust focus of the camera or measure the cross-sectional shape.

In the present embodiment, the cases where the camera unit 300 and the illumination unit 400 are fixed at the positions A and B on the slide unit 200 are described. However, no limitation is intended thereby. Alternatively, the camera unit 300 and the illumination unit 400 may be fixed at the positions A and B of the vehicle 500. The configuration will be described below.

For example, the camera unit 300 and the illumination unit 400 are attached to the vehicle fixing base plate.

In the case of position A, the vehicle fixing base plate is fixed to the right end of the roof of the vehicle 500 in the traveling direction using the hook part (an example of the image acquiring section fixing means and the illumination section fixing means), so that the camera unit 300 and the illumination unit 400 are fixed to the vehicle 500.

In the case of the position B, the camera unit 300 and the illumination unit 400 are fixed to the left end of the roof of the vehicle in the traveling direction using the hook parts, so that the camera unit 300 and the illumination unit 400 are fixed to the vehicle 500.

Further, parts similar to the guide shaft 240 and the guide shaft holding members 251 and 252 are provided on the vehicle fixing base plate, and the guide shaft 240 are coupled to the shaft coupling parts 341, 342, 441, and 442. Such a configuration can eliminate or reduce the effect of the change in positions/postures of the camera unit 300 and the illumination unit 400.

In this example, the imaging device 100 may not include the slide unit 200. Further, the camera unit 300 and the illumination unit 400 may not include index plungers 350 and 450, respectively.

As described above, when the camera unit 300 and the illumination unit 400 are fixed to the vehicle 500, the same advantageous effects can be exhibited as in the case where the camera unit 300 and the illumination unit 400 are fixed to the positions A and B of the slide unit 200.

### Second Embodiment

Next, a second embodiment will be described with reference to the drawings. Overlapping descriptions with the description of the first embodiment are omitted, and the differences will be described.

In the first embodiment, a set of the camera unit 300 and the illumination unit 400 is fixed to the positions A and B to photograph the tunnel wall from each position, so that a desired focus is obtained irrespective of the presence or absence of the sidewalk 730.

However, when the sidewalk 730 has a large width, a desired focus might not be obtained at both positions by sliding the camera unit 300 and the illumination unit 400 from the position A to the position B. That is, for example, even when brought into focus at the position A, the imaging device 100 goes out of focus at the position B.

In view of such circumstances, in the imaging device 101 according to the present embodiment, a part or all of the cameras 331 to 334 of the camera unit 300 has a configuration that achieves two types of focuses.

For example, the distance between the lens 334-1 and the line CCD 334-2 in the camera 334 can be set to the distance a and the distance b.

The distance a is a distance in the direction of the optical axis between the lens 334-1 and the line CCD 334-2 to obtain an in-focus image of the wall when the camera unit 300 and the illumination unit 400 are positioned at the position A.

The distance b is a distance in the direction of the optical axis between the lens 334-1 and the line CCD 334-2 to obtain an in-focus image of the wall when the camera unit 300 and the illumination unit 400 are positioned at the position B.

An example of the setting of the distance a and the distance b will be described. For example, the lens 334-1 is movable toward and away from the line CCD 334-2. Then, in the direction in which the lens 334-1 moves toward and away from the line CCD 334-2, the lens 334-1 is fixable only at predetermined two positions by using the above-described parts for fixing the index plunger or the like.

This configuration enables the distance a and the distance b to be easily set without using a complicated adjustment unit or adjustment method.

It should be noted that the positions at which the lens 334-1 is fixed to determine the distance a and the distance b may be preliminarily obtained so as to obtain a focused image of the wall.

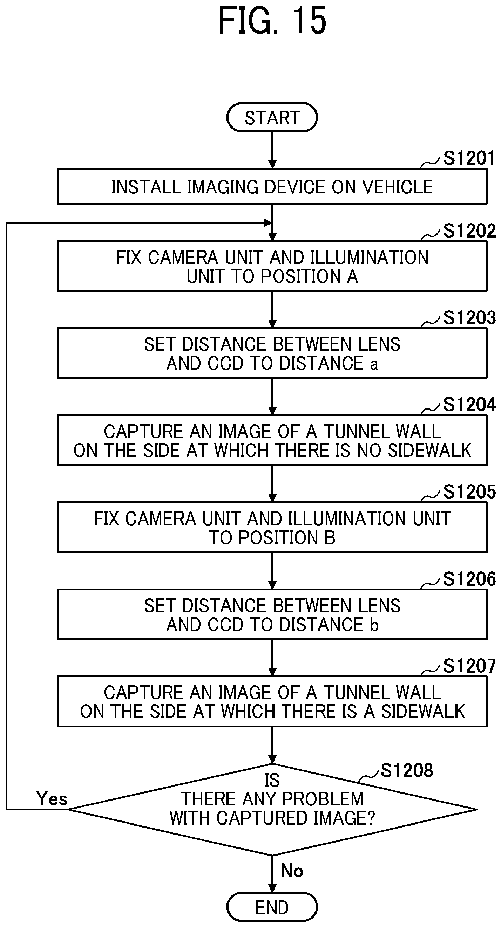

Next, the photographing (image-capturing) operations executed by the imaging device 100 according to the present embodiment will be described with reference to FIG. 15.

First, in step S1201, the imaging device 101 is attached to the vehicle 500.

Next, the camera unit 300 and the illumination unit 400 are fixed to the position A using the slide unit 200 (step S1202).

In this case, for example, a user manually slides and fixes the camera unit 300 and the illumination unit 400 at the position A.

Next, the distance between the lens 334-1 and the line CCD 334-2 is set to the distance a by moving the lens 334-1 toward and away from the line CCD 334-2 (step S 1203).

Then, the imaging device 100 photographs the area 600A of the wall on the side where there is no sidewalk 730 in the tunnel 600 while the vehicle 500 travels from the entrance to the exit of the tunnel 600 (step S1204).

In this case, the imaging device 100 starts photographing when the vehicle 500 enters the tunnel 600 through the entrance. For example, the user gives instructions to start photographing.

When the vehicle 500 reaches the exit of the tunnel 600, the imaging device 100 stops photographing. For example, the user gives instructions to stop photographing.

Up to this time, image data of half of the entire wall of the tunnel 600 is stored in the memory 120.

Subsequently, the camera unit 300 and the illumination unit 400 are fixed to the position B using the slide unit 200 (step S1205). In this case, for example, the user manually slides and fixes the camera unit 300 and the illumination unit 400 at the position B.

Next, the distance between the lens 334-1 and the line CCD 334-2 is set to the distance b by moving the lens 334-1 toward and away from the line CCD 334-2 (step S 1206).

Then, the imaging device 100 photographs the area 600B of the wall on the side where there is a sidewalk 730 in the tunnel 600 while the vehicle 500 travels from the entrance to the exit of the tunnel 600 in the opposite direction of step S1204 (step S1207). Same as the above, the user gives instructions to start/stop photographing, for example.

As a result, the imaging device 100 captures images of the remaining half of the entire wall of the tunnel 600, and the image data is stored in the memory 120.

The user checks whether there is any problem with the captured image (step S1208). If there is a problem (YES in step S1208), the photographing processing ends.

With such a configuration, even when the tunnel 600 has a large width, a desired focus can be obtained by sliding, for example, the camera unit 300 from the position A to the position B to change the distance between the lens 334-1 and the line CCD 334-2 from the distance a to the distance b.

In the above description, the cases where two focuses are achieved by moving the lens 334-1 toward and away from the line CCD 334-2 are described. However, no limitation is intended thereby.

Alternatively, for example, the line CCD 334-2 may be moved back and forth relative to the lens 334-1. Alternatively, a plurality of lenses 334-1 is provided and one or all of the lenses 334-1 may be moved back and forth relative to the line CCD 334-2.

In some embodiments, the distance a and the distance b may be set for each of the cameras 331 to 334. In that case, the distance a and the distance b may be different between the cameras 331 to 334.

That is, the distance to the wall of the tunnel 600 differs between the cameras 331 to 334. Accordingly, the distance a and the distance b to achieve focuses at the position A and the position B, respectively may be set for each camera.

### Third Embodiment

Next, a third embodiment will be described with reference to the drawings. Overlapping descriptions with the description of the first embodiment and the second embodiment are omitted, and the differences will be described.

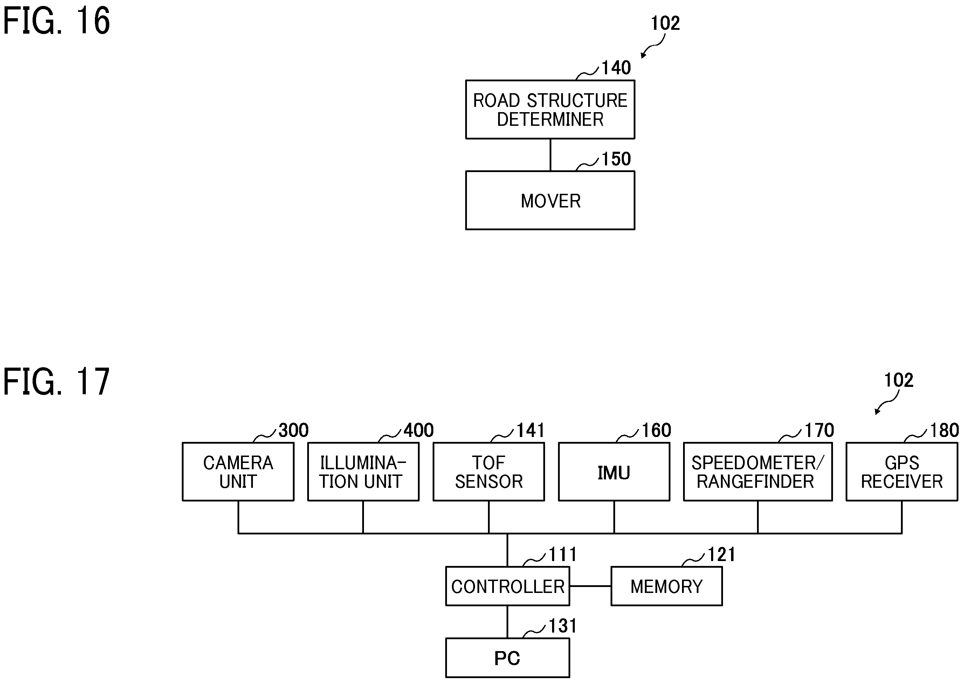

FIG. 16 is a block diagram of a functional configuration of the imaging device 102 according to the present embodiment.

In FIG. 16, the imaging device 102 includes a road structure determiner 140 and a mover 150 that moves, for example a camera unit 300.

The road structure determiner 140 identifies the characteristics of a road structure. For example, the road structure determiner 140 determines whether there is a sidewalk 730 on the lane side where the vehicle 500 travels in the tunnel 600.

The mover 150 moves the camera unit 300 and the illumination unit 400 to the position A or B according to information such as the presence or absence of the sidewalk 730 of the road structure determiner 140.

The mover 150 includes in the slide unit 200, for example, a table on which the camera unit 300 and the illumination unit 400, a ball screw connected to the table, and a motor connected to the ball screw.

The motor is driven to move the table so that the camera unit 300 and the illumination unit 400 are moved to the position A or B. However, the configuration of the mover 150 is not limited to this, and other types of moving units are applicable.

FIG. 17 is a block diagram of a hardware configuration of the imaging device 102 according to the present embodiment.

In FIG. 17, the imaging device 102 includes a camera unit 300, an illumination unit 400, a controller 111, a memory 121, and a PC 131.

Further, the imaging device 102 has a time-of-flight (TOF) sensor 141, an inertial measurement unit (IMU) 160, a speedometer/rangefinder 170, and a global positioning system (GPS) receiver 180.

The TOF sensor 141 measures the distance from the wall of the tunnel 600 to the TOF sensor 141. For example, the distance to the wall of the tunnel 600, which is an object to be measured, is measured based on the time from when the TOF sensor 141 emits light to when the TOF receives the reflected light.

For example, the TOF sensor 141 that includes an area sensor as the image sensor can obtain two-dimensional contour line images with different display colors according to the distance.

The controller 111 receives the two-dimensional contour line image output from the TOF sensor 141.

The controller 111 determines that there is no sidewalk on the lane when the distance (from the TOF sensor 141 to the wall of the tunnel 600) is less than or equal to a threshold value, using the distance information regarding an area in the vicinity of the ground within the contour line image. When the distance is greater than the threshold value, the controller 111 determines that there is a sidewalk on the lane.

In the present embodiment, the TOF sensor 141 and a part of the controller 111 functions as the road structure determiner 140.

The IMU 160 measures angular/angular velocities and accelerations of three axes that govern the motion of the vehicle 500.

The vehicle speedometer/rangefinder 170 measures the speed/moved distance of the vehicle 500.

The data measured by the IMU 160 and the vehicle speedometer/rangefinder 170 are stored in the memory 121, and are used later for geometrically correcting the size and inclination of the image of the wall in image processing.

The GPS receiver 180 will be described later.

In addition, the controller 111 controls the camera unit 300 to start or end acquisition of image data, and also controls the illumination unit 400 to turn on and off. In addition to the control of capturing image data, the controller 111 further acquires data output from the TOF sensor 141, the IMU 160, and the vehicle speedometer/rangefinder 170 and outputs the data to the memory 121.

The memory 121 stores the image data output from the camera unit 300 and the sensor data output from the TOF sensor 141, the IMU 160, and the speedometer/rangefinder 170.

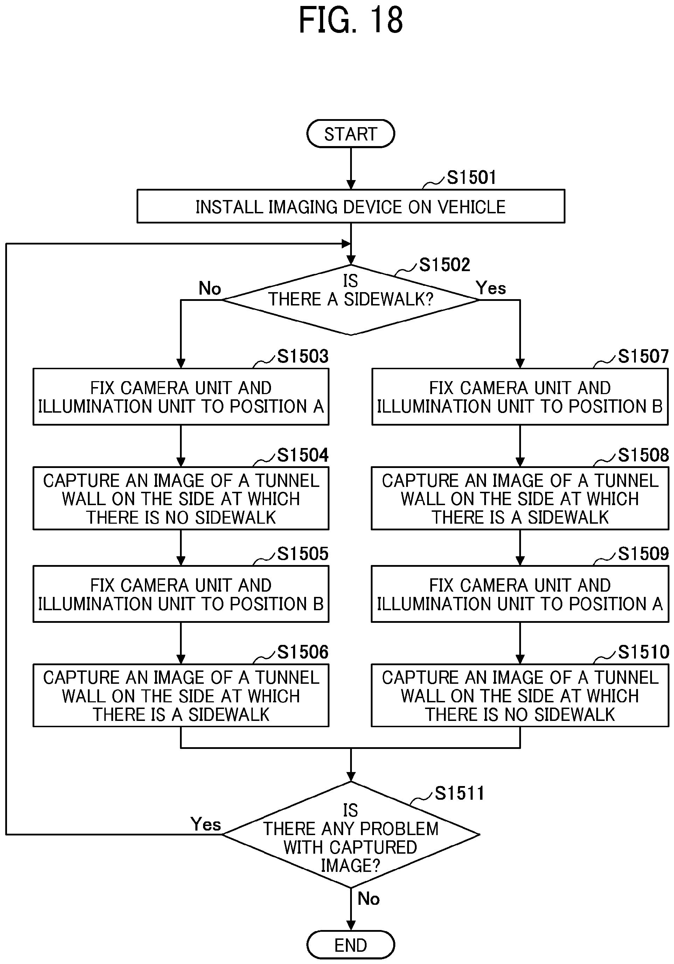

Next, the photographing (image-capturing) operations executed by the imaging device 102 according to the present embodiment will be described with reference to FIG. 18.

First, in step S1501, the imaging device 102 is attached to the vehicle 500.

Next, the road structure determiner 140 determines the presence or absence of the sidewalk 730 and outputs the determination result to the mover 150 that moves, for example, the camera unit 300 (step S1502).

When the road structure determiner 140 determines that there is no sidewalk 730, the mover 150 slides the camera unit 300 and the illumination unit 400 to be secured at the position A. (step S1503).

Note that the fixing means such as the camera unit 300 in this embodiment is not an index plunger 350 as described above, but is an electromagnetic brake of a motor of the mover 150 that moves, for example the camera unit 300.

Next, the imaging device 100 photographs the area 600A of the wall on the side where there is no sidewalk 730 in the tunnel 600 while the vehicle 500 travels from the entrance to the exit of the tunnel 600 (step S1504).

In this case, the imaging device 100 starts photographing when the vehicle 500 enters the tunnel 600 through the entrance. For example, the user gives instructions to start photographing.

When the vehicle 500 reaches the exit of the tunnel 600, the imaging device 100 stops photographing. For example, the user gives instructions to stop photographing.

Up to this time, image data of half of the entire wall of the tunnel 600 is stored in the memory 121.

Subsequently, the mover 150 slides and fixes the camera unit 300 and the illumination unit 400 to the position B (step S1505).

Then, the imaging device 100 photographs the area 600B of the wall on the side where there is a sidewalk 730 in the tunnel 600 while the vehicle 500 travels from the entrance to the exit of the tunnel 600 in the opposite direction of step S1504 (step S1506). Same as the above, the user gives instructions to start/stop photographing, for example.

As a result, the imaging device 100 captures images of the remaining half of the entire wall of the tunnel 600, and the image data is stored in the memory 120.

On the other hand, when the road structure determiner 140 determines that there is a sidewalk 730, the mover 150 slides and fixes the camera unit 300 and the illumination unit 400 to the position B. (step S1507).

Next, the imaging device 100 photographs the area 600B of the wall on the side where there is the sidewalk 730 in the tunnel 600 while the vehicle 500 travels from the entrance to the exit of the tunnel 600 (step S1508).

In this case, the imaging device 100 starts photographing when the vehicle 500 enters the tunnel 600 through the entrance. For example, the user gives instructions to start photographing.

When the vehicle 500 reaches the exit of the tunnel 600, the imaging device 100 stops photographing. For example, the user gives instructions to stop photographing.

Up to this time, image data of half of the entire wall of the tunnel 600 is stored in the memory 120.

Subsequently, the mover 150 slides and fixes the camera unit 300 and the illumination unit 400 to the position A (step S1509).

Then, the imaging device 100 photographs the area 600A of the wall on the side where there is no sidewalk 730 in the tunnel 600 while the vehicle 500 travels from the entrance to the exit of the tunnel 600 in the opposite direction of step S1506 (step S1510). Same as the above, the user gives instructions to start/stop photographing, for example.

As a result, the imaging device 100 captures images of the remaining half of the entire wall of the tunnel 600, and the image data is stored in the memory 120.

The user checks whether there is any problem with the captured image (step S1511). When there is a problem (YES in step S1511), the process returns to step S1502.

Such a configuration enables the presence or absence of the sidewalk 730 to be automatically determined, and also enables the camera unit 300 and the illumination unit 400 to be automatically fixed at the position A or B.

As a result, the wall of the structure such as a tunnel can be photographed without taking time and effort.

### Fourth Embodiment

Next, a fourth embodiment will be described with reference to the drawings. Overlapping descriptions with the description of the first embodiment to the third embodiment are omitted, and the differences will be described.

The present embodiment differs from the third embodiment in that the road structure is identified using GPS information in the present embodiment.

The imaging device 102 includes the GPS receiver 180 as illustrated in FIG. 17. Further, the memory 121 includes characteristic information of a predetermined road structure identified by the road and lane on which the vehicle travels. The characteristic information of the predetermined road structure is map information including information regarding the presence or absence of, for example, a sidewalk, for example.

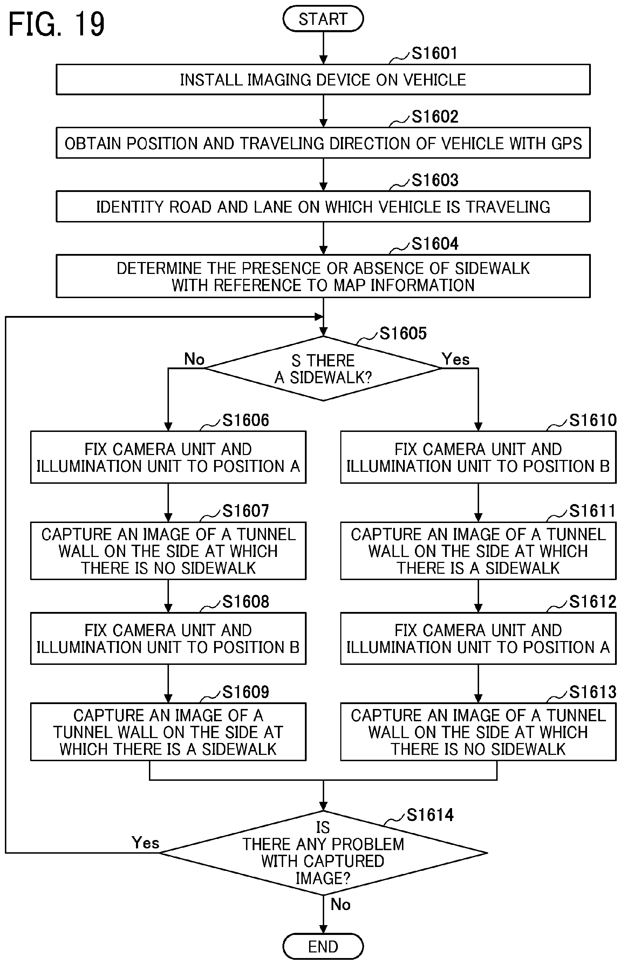

FIG. 19 is a flowchart of photographing operations executed by the imaging device 102 according to the present embodiment.

In step S1602, the GPS receiver acquires the position where the vehicle 500 is currently traveling and outputs it to the controller 111.

The controller 111 obtains the position of the vehicle 500 and determines the direction of travel of the vehicle 500 based on the time difference between the positions of the vehicle 500.

Based on such data, the controller 111 identifies the road and the lane where the vehicle 500 is currently traveling, referring to the memory 121 (step S1603).

Then, the controller 111 determines the presence or absence of the sidewalk 730 in the identified lane, referring to the memory 121 (S1604).

In the present embodiment, the GPS receiver 180, a part of the controller 111, and a part of the memory 121 function as the road structure determiner 140.

It should be noted that another memory other than the memory 121 may be provided and the map information may be stored in said another memory.

Steps following step S1605 are the same as those described in the third embodiment and are thus omitted.

Such a configuration enables the presence or absence of the sidewalk 730 to be automatically determined, and also enables the camera unit 300 and the illumination unit 400 to be automatically fixed at the position A or B.

As a result, the wall of the structure such as a tunnel can be photographed without taking time and effort.

### Fifth Embodiment

In the fifth embodiment of the present disclosure, the cases where a depth-of-field extension camera is used in the camera unit 300 are described.

In the present disclosure, the depth of field refers to the range of the distance on the object side where an object appears sharp in a photographed image. That is, in the present embodiment, the depth of field is the range of the distance on the object side where an object appears sharp in the image captured by the camera unit 300.

The depth-of-field extension camera is a camera with an extended depth of field.

More specifically, the depth-of-field extension camera includes an inverse transformation means for executing an inverse transformation process to restore blur due to aberration by using an inverse transformation filter. In such a depth-of-field extension camera, an optical system and an imaging unit are arranged to form an in-focus position such that a focal plane extended in the direction of the optical axis of the optical system is formed.

More specifically, the depth-of-field extension camera includes a lens that imparts uniform aberration to the incident light and an image processing unit that restores the spatial frequency by the inverse filter processing on the image imparted with that aberration.

With the depth-of-field extension camera, uniform aberration can be imparted over a wider range than the "in-focus range" (depth of field) assumed based on the focal length and the size (F value) of the aperture of the lens. Thus, the depth-of-field extension camera has a deeper depth of field.

Compared with the depth of field assumed based on the focal length of the lens and the size of the aperture (F value), the depth of field of the depth-of-field extension camera increases up to about five times.

As aberration, not only spherical aberration but also aspherical aberration such as third-order aberration can be imparted. In the present embodiment, the aspherical aberration is imparted to have better performance so that the lens is asymmetric in the lateral direction.

In general, reducing the aperture of the lens to increase the F value enables the depth of field to be extended without using the above-mentioned depth-of-field extension camera. However, with such a reduction in the aperture of the lens to increase the F value, the light incident on the imaging unit of the camera decreases (darkens). Accordingly, the brightness of the illumination is to be increased to obtain the same image quality.

For example, when the number of light sources of illumination is increased, various disadvantages occur in terms of, e.g., electric power, cost, size of the imaging device, and the illumination direction to be adjusted. However, the depth-of-field extension camera enables a sufficient brightness of the lens to be obtained and also enables the depth-of-field to be extended without increasing the F value.

As there is no need to compensate for the lack of brightness of the lens by the brightness of illumination, various disadvantages due to the increase in the number of light sources of the illumination can be avoided in terms of, e.g., electric power, cost, the size of the imaging device, and the illumination direction to be adjusted.

As an example, when the size of one pixel of the image sensor is 5 µm × 5 µm, the focal length of the lens is 60 mm, the F value is 4, and the distance to the object is 3000 mm, the depth of field assumed based on the focal length of the lens and the size (F value) is about 200 mm, whereas the depth-of-field extension camera obtains a depth of field of about 990 mm.

Even when the wall of the tunnel is not of a cylindrical shape but is a plane perpendicular to the optical axis of the camera, an image captured by such a lens (a lens of which a depth of field is assumed based on the focal length and the aperture size (F value)) blurs with a change in distance between the camera and the wall of the tunnel by 200 mm. For this reason, the permissible range of the meandering in which the distance between the camera and the tunnel wall changes is 200 mm.

On the other hand, when the depth-of-field extension camera is used, there is a margin of 990 mm so that an image without blurring can be captured until the distance between the camera and the tunnel wall changes by 990 mm. That is, the permissible range of meandering can be increased up to 990 mm.

In general, a phenomenon called "visual suction action" tends to occur in a vehicle traveling inside a tunnel. In such a phenomenon, a driver on the vehicle inadvertently approaches or goes away from the wall of the tunnel due to concentration of his/her focus on the wall of the tunnel.

Further, the "fluid stimulus" in which the driver feels the speed with a change in the surrounding scenery tends to weaken in a vehicle traveling inside the tunnel. This is because almost the same landscape continues inside the tunnel. When the fluid stimulus weakens, the driver feels as if his/her car is parked, which might lead to a reduction in driving feeling.

In this way, it can be said that the driver who is driving a vehicle inside the tunnel is more likely to drive in meandering than driving on any known road. According to the present embodiments, employing the depth-of-field extension camera even in an environment where the vehicle is likely to meander can increase the permissible range of meandering. As a result, better quality image can be obtained.

By the way, the present inventors have experimentally found that meandering of about 500 mm has occurred although the driver was careful not to drive in meandering.

More specifically, refer to JP 2015-211401-A.

The effect of using the depth-of-field extension camera is not limited to the above meandering problem. When the depth-of-field extension camera is used, for example, there is no need to adjust the focus and the position of the object and the camera in a predetermined range. Thus, using the depth-of-field extension camera exhibits advantageous effects to avoid various troubles in, e.g., adjusting focus.

In the present embodiment, the camera unit 300 includes a depth-of-field extension camera. That is, any or all the cameras 331 to 334 are the depth-of-field extension cameras.

In this case, compared with the case where this embodiment is not applied, it is possible to increase the distance on the object side where the captured image appears sharp, that is, the range from the cameras 331 to 334 to the wall of the tunnel 600.

For example, the distance from the vehicle traveling in the lane to the wall of the tunnel differs between a large tunnel and a small tunnel. For this reason, in the case where this embodiment is not applied, even if the focus is adjusted so as to capture an in-focus image at a large tunnel, capturing an in-focus image of the tunnel wall fails in another small tunnel due to the same focus state as in the large tunnel.

According to the present embodiment, the depth of field of the camera can be enlarged so that in-focus images of the tunnel wall can be captured in both large and small tunnels without changing the focus state of the camera.

In other words, the configuration according to the present embodiment can increase the permissible range of the size of the tunnel in which an in-focus image can be captured without changing the focus state of the camera.

According to each of the above-described embodiments, a lot of time and work can be reduced in photographing the wall of the structure. Further, even in a dark structure such as a tunnel, a wall of the structure can be photographed with a sufficient intensity without taking a lot of time and work.

Although the embodiments of the present disclosure have been described above, the present disclosure is not limited to such specific embodiments, and various other embodiments may be used without departing from the scope of the present disclosure as set forth in the appended claims.

Specifically, the vehicle on which the camera is mounted may be a two-wheeled vehicle, a four-wheeled vehicle such as a general car, a construction/agriculture/industrial vehicle, a railroad vehicle, a special vehicle, or a vehicle such as a drone. These vehicles are collectively referred to as a mobile object.

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways.

## Claims

1. A vehicle (500) on which is mounted a structure-wall imaging device (100), the structure-wall imaging device (100) comprising:
an image acquisition unit (300) including a plurality of cameras (331 to 334) to acquire an image of a wall of a structure (600);
a mechanical component (200) that is movable to change a position of the image acquisition unit (300) within a plane intersecting with a direction of travel of the vehicle (500), wherein the image acquisition unit (300) slides in a direction intersecting with the direction of travel of the vehicle (500); and
fixing means (350) for fixing the image acquisition unit (300) to the mechanical component (200) at one of two different positions in a direction facing the wall of the structure (600) within the plane based on presence or absence of a predetermined road structure (730) to maintain common photographing conditions for the image such as focus state, magnification, and brightness of illumination.

2. The vehicle (500) according to claim 1,
wherein the structure (600) is a tunnel, and the plurality of cameras (331 to 334) is arranged in a radial manner such that a direction in which each of the cameras (331 to 334) acquires an image faces the wall of the tunnel (600).

3. The vehicle (500) according to any of claims 1 and 2,
wherein the image acquisition unit (300) further includes a line image sensor in which pixels are arranged in a direction intersecting with the direction of travel of the vehicle (500).

4. The vehicle (500) according to any of claims 1 through 3, the structure-wall imaging device (100) further comprising:
an illumination unit (400) to illuminate the wall of the structure (600);
another mechanical component to change a position of the illumination unit (400) within a plane intersecting with the direction of travel of the vehicle (500); and
another fixing means (450) for fixing the illumination unit (400) to said another mechanical component at one of two different positions in the direction facing the wall of the structure (600) within the plane.

5. The vehicle (500) according to any of claims 1 through 4, the structure-wall imaging device (100) further comprising:
an illumination unit (400) to illuminate the wall of the structure (600); and
another fixing means (450) for fixing the illumination unit (400) to the vehicle (500) at one of two different positions in the direction facing the wall of the structure (600) within the plane intersecting with the direction of travel of the vehicle (500).

6. The vehicle (500) according to claim 4 or 5, the structure-wall imaging device (100) further comprising a guide member (240, 251, and 252) to change positions of the image acquisition unit (300) and the illumination unit (400) with one of a relative position and a relative posture between the image acquisition unit (300) and the illumination unit (400) maintained.

7. The vehicle (500) according to claim 6,
wherein the guide member (240, 251, and 252) includes:
a shaft member (240) of which a longitudinal direction is parallel with a direction that changes the positions of the image acquisition unit (300) and the illumination unit (400);
a first shaft coupling part (341) on an image acquisition unit side to be coupled with the shaft member (240); and
a second shaft coupling part (441) on an illumination unit side to be coupled with the shaft member (240).

8. The vehicle (500) according to any of claims 4 through 7,
wherein an illumination direction of the illumination unit (400) is tilted with respect to a direction, in which the image acquisition unit (300) acquires the image, to illuminate an area of the image to be acquired by the acquisition unit (300) in the wall of the tunnel (600).

9. The vehicle (500) according to any of claims 4 through 8,
wherein the illumination unit (400) emits linear light parallel with the direction intersecting with the direction of travel of the vehicle (500).

10. The vehicle (500) according to any of claims 1 through 9,
wherein the one of the two different positions to be fixed is determined based on a length of a predetermined road structure.

11. The vehicle (500) according to claim 10, further comprising a road structure determiner (140) to identify characteristics of the predetermined road structure.

12. The vehicle (500) according to claim 11,
wherein the road structure determiner (140) includes a GPS receiver to output location information indicating a current location of the vehicle, and a controller (110) to identify a road and a lane on which the vehicle (500) travels based on output of the GPS receiver.

13. The vehicle (500) according to any of claims 1 through 4,
wherein the image acquisition unit (300) includes a depth-of-field extension camera.

14. A structure-wall imaging method comprising:
determining, based on the presence or absence of a predetermined road structure (730), one of two positions of an image acquisition unit (300) mounted on a vehicle (600), including a plurality of cameras (331 to 334), in a direction facing a wall of a structure (600) within a plane intersecting with a direction of travel of the vehicle (500);
sliding the image acquisition unit (300) in a direction intersecting with the direction of travel of the vehicle (500);
fixing the image acquisition unit (300) at the determined one of the two positions; and
acquiring an image of the wall of the structure (500) with the image acquisition unit (300) fixed at the determined one of the two positions to maintain common photographing conditions for the image such as focus state, magnification, and brightness of illumination.

## Patentansprüche

1. Fahrzeug (500), auf dem eine Strukturwand-Bildgebungsvorrichtung (100) montiert ist, wobei die Strukturwand-Bildgebungsvorrichtung (100) Folgendes umfasst:
eine Bildaufnahmeeinheit (300) einschließlich einer Vielzahl von Kameras (331 bis 334), um ein Bild einer Wand einer Struktur (600) aufzunehmen;
eine mechanische Komponente (200), die beweglich ist, um eine Position der Bildaufnahmeeinheit (300) in einer Ebene zu verändern, die eine Bewegungsrichtung des Fahrzeugs (500) schneidet, wobei sich die Bildaufnahmeeinheit (300) in eine Richtung verschiebt, die die Bewegungsrichtung des Fahrzeugs (500) schneidet; und
Befestigungsmittel (350) zum Befestigen der Bildaufnahmeeinheit (300) an der mechanischen Komponente (200) an einer von zwei unterschiedlichen Positionen in einer Richtung, die der Wand der Struktur (600) in der Ebene zugewandt ist, basierend auf der Anwesenheit oder Abwesenheit einer vorbestimmten Straßenstruktur (730), um gewöhnliche Fotografierbedingungen für das Bild wie z. B. Fokussierzustand, Vergrößerung und Helligkeit der Beleuchtung aufrechtzuhalten.

2. Fahrzeug (500) nach Anspruch 1,
wobei die Struktur (600) ein Tunnel ist und die Vielzahl von Kameras (331 bis 334) auf radiale Weise angeordnet ist, sodass eine Richtung, in der jede der Kameras (331 bis 334) ein Bild aufnimmt, der Wand des Tunnels (600) zugewandt ist.

3. Fahrzeug (500) nach einem der Ansprüche 1 und 2,
wobei die Bildaufnahmeeinheit (300) ferner einen Zeilenbildsensor beinhaltet, in dem Pixel in einer Richtung angeordnet sind, die die Bewegungsrichtung des Fahrzeugs (500) schneidet.

4. Fahrzeug (500) nach einem der Ansprüche 1 bis 3, wobei die Strukturwand-Bildgebungsvorrichtung (100) ferner Folgendes umfasst:
eine Beleuchtungseinheit (400), um die Wand der Struktur (600) zu beleuchten;
eine weitere mechanische Komponente, um eine Position der Beleuchtungseinheit (400) in einer Ebene zu verändern, die die Bewegungsrichtung des Fahrzeugs (500) schneidet; und
ein weiteres Befestigungsmittel (450) zum Befestigen der Beleuchtungseinheit (400) an der anderen mechanischen Komponente an einer von zwei unterschiedlichen Positionen in der Richtung, die der Wand der Struktur (600) in der Ebene zugewandt ist.

5. Fahrzeug (500) nach einem der Ansprüche 1 bis 4, wobei die Strukturwand-Bildgebungsvorrichtung (100) ferner Folgendes umfasst:
eine Beleuchtungseinheit (400), um die Wand der Struktur (600) zu beleuchten; und
ein weiteres Befestigungsmittel (450) zum Befestigen der Beleuchtungseinheit (400) an dem Fahrzeug (500) an einer von zwei unterschiedlichen Positionen in der Richtung, die der Wand der Struktur (600) in der Ebene zugewandt ist, die die Bewegungsrichtung des Fahrzeugs (500) schneidet.

6. Fahrzeug (500) nach Anspruch 4 oder 5, wobei die Strukturwand-Bildgebungsvorrichtung (100) ferner ein Führungselement (240, 251 und 252) umfasst, um Positionen der Bildaufnahmeeinheit (300) und der Beleuchtungseinheit (400) mit einem aus einer relativen Position und einer relativen Lage zwischen der aufrechtgehaltenen Bildaufnahmeeinheit (300 und der Beleuchtungseinheit (400) zu verändern.

7. Fahrzeug (500) nach Anspruch 6,
wobei das Führungselement (240, 251 und 252) Folgendes beinhaltet:
ein Wellenelement (240), von dem eine Längsrichtung parallel mit einer Richtung ist, die die Positionen der Bildaufnahmeeinheit (300) und der Beleuchtungseinheit (400) verändert;
einen ersten Wellenkupplungsteil (341) auf einer Bildaufnahmeeinheitsseite, die mit dem Wellenelement (240) gekoppelt werden soll; und
einen zweiten Wellenkupplungsteil (441) auf einer Beleuchtungseinheitsseite, die mit dem Wellenelement (240) gekoppelt werden soll.

8. Fahrzeug (500) nach einem der Ansprüche 4 bis 7,
wobei eine Beleuchtungsrichtung der Beleuchtungseinheit (400) in Bezug auf eine Richtung geneigt ist, in der die Bildaufnahmeeinheit (300) das Bild aufnimmt, um einen Bereich des Bilds zu beleuchten, der durch die Aufnahmeeinheit (300) in der Wand des Tunnels (600) aufgenommen werden soll.

9. Fahrzeug (500) nach einem der Ansprüche 4 bis 8,
wobei die Beleuchtungseinheit (400) lineares Licht parallel mit der Richtung emittiert, die die Bewegungsrichtung des Fahrzeugs (500) schneidet.

10. Fahrzeug (500) nach einem der Ansprüche 1 bis 9,
wobei die eine der zwei unterschiedlichen Positionen, die befestigt werden soll, basierend auf einer Länge einer vorbestimmten Straßenstruktur bestimmt wird.

11. Fahrzeug (500) nach Anspruch 10, ferner umfassend eine Straßenstrukturbestimmungsvorrichtung (140), um Merkmale der vorbestimmten Straßenstruktur zu identifizieren.

12. Fahrzeug (500) nach Anspruch 11,
wobei die Straßenstrukturbestimmungsvorrichtung (140) einen GPS-Empfänger, um Standortinformationen auszugeben, die einen aktuellen Standort des Fahrzeugs angeben, und eine Steuerung (110) beinhaltet, um eine Straße und eine Fahrspur zu identifizieren, auf der das Fahrzeug (500) fährt, basierend auf einer Ausgabe des GPS-Empfängers.

13. Fahrzeug (500) nach einem der Ansprüche 1 bis 4,
wobei die Bildaufnahmeeinheit (300) eine Kamera zur Erweiterung der Schärfentiefe beinhaltet.

14. Strukturwand-Bildgebungsverfahren, umfassend:
Bestimmen, basierend auf der Anwesenheit oder Abwesenheit einer vorbestimmten Straßenstruktur (730), von einer aus zwei Positionen einer Bildaufnahmeeinheit (300), die auf einem Fahrzeug (600) montiert ist, einschließlich einer Vielzahl von Kameras (331 bis 334) in einer Richtung, die einer Wand einer Struktur (600) in einer Ebene zugewandt ist, die eine Bewegungsrichtung des Fahrzeugs (500) schneidet;
Verschieben der Bildaufnahmeeinheit (300) in eine Richtung, die die Bewegungsrichtung des Fahrzeugs (500) schneidet;
Befestigen der Bildaufnahmeeinheit (300) an der bestimmten der zwei Positionen; und
Aufnehmen eines Bilds der Wand der Struktur (500) mit der Bildaufnahmeeinheit (300), die an der bestimmten der zwei Positionen befestigt ist, um gewöhnliche Fotografierbedingungen für das Bild wie z. B. Fokussierzustand, Vergrößerung und Helligkeit der Beleuchtung aufrechtzuhalten.

## Revendications

1. Véhicule (500) sur lequel est monté un dispositif d'imagerie de paroi de structure (100), le dispositif d'imagerie de paroi de structure (100) comprenant :
une unité d'acquisition d'image (300) comprenant une pluralité de caméras (331 à 334) pour acquérir une image d'une paroi d'une structure (600) ;
un composant mécanique (200) qui est mobile pour changer une position de l'unité d'acquisition d'image (300) dans un plan croisant une direction de déplacement du véhicule (500), dans lequel l'unité d'acquisition d'image (300) coulisse dans une direction croisant la direction de déplacement du véhicule (500) ; et
un moyen de fixation (350) pour fixer l'unité d'acquisition d'image (300) au composant mécanique (200) dans l'une des deux positions différentes dans une direction faisant face à la paroi de la structure (600) dans le plan sur la base de la présence ou de l'absence d'une structure de route prédéterminée (730) pour maintenir des conditions de photographie communes pour l'image telles que l'état de mise au point, le grossissement et la luminosité de l'éclairage.

2. Véhicule (500) selon la revendication 1,
dans lequel la structure (600) est un tunnel et la pluralité de caméras (331 à 334) est agencée de manière radiale de telle sorte qu'une direction dans laquelle chacune des caméras (331 à 334) acquiert une image fait face à la paroi du tunnel (600).

3. Véhicule (500) selon l'une quelconque des revendications 1 et 2,
dans lequel l'unité d'acquisition d'image (300) comprend en outre un capteur d'image linéaire dans lequel des pixels sont disposés dans une direction croisant la direction de déplacement du véhicule (500).

4. Véhicule (500) selon l'une quelconque des revendications 1 à 3, le dispositif d'imagerie de paroi de structure (100) comprenant en outre :
une unité d'éclairage (400) pour éclairer la paroi de la structure (600) ;
un autre composant mécanique pour changer une position de l'unité d'éclairage (400) dans un plan croisant la direction de déplacement du véhicule (500) ; et
un autre moyen de fixation (450) pour fixer l'unité d'éclairage (400) audit autre composant mécanique dans l'une des deux positions différentes dans la direction faisant face à la paroi de la structure (600) dans le plan.

5. Véhicule (500) selon l'une quelconque des revendications 1 à 4, le dispositif d'imagerie de paroi de structure (100) comprenant en outre :
une unité d'éclairage (400) pour éclairer la paroi de la structure (600) ; et
un autre moyen de fixation (450) pour fixer l'unité d'éclairage (400) au véhicule (500) à l'une des deux positions différentes dans la direction faisant face à la paroi de la structure (600) dans le plan croisant la direction de déplacement du véhicule (500).

6. Véhicule (500) selon la revendication 4 ou 5, le dispositif d'imagerie de paroi de structure (100) comprenant en outre un élément de guidage (240, 251 et 252) pour changer les positions de l'unité d'acquisition d'image (300) et de l'unité d'éclairage (400) avec l'une d'une position relative et d'une posture relative entre l'unité d'acquisition d'image (300) et l'unité d'éclairage (400) maintenue.

7. Véhicule (500) selon la revendication 6,
dans lequel l'élément de guidage (240, 251 et 252) comprend :
un élément d'arbre (240) dont une direction longitudinale est parallèle à une direction qui change les positions de l'unité d'acquisition d'image (300) et de l'unité d'éclairage (400) ;
une première partie d'accouplement d'arbre (341) sur un côté de l'unité d'acquisition d'image à coupler avec l'élément d'arbre (240) ; et
une seconde partie d'accouplement d'arbre (441) sur un côté de l'unité d'éclairage à coupler avec l'élément d'arbre (240).

8. Véhicule (500) selon l'une quelconque des revendications 4 à 7,
dans lequel une direction d'éclairage de l'unité d'éclairage (400) est inclinée par rapport à une direction, dans laquelle l'unité d'acquisition d'image (300) acquiert l'image, pour éclairer une zone de l'image à acquérir par l'unité d'acquisition (300) dans la paroi du tunnel (600).

9. Véhicule (500) selon l'une quelconque des revendications 4 à 8,
dans lequel l'unité d'éclairage (400) émet une lumière linéaire parallèle à la direction croisant la direction de déplacement du véhicule (500).

10. Véhicule (500) selon l'une quelconque des revendications 1 à 9,
dans lequel l'une des deux positions différentes à fixer est déterminée sur la base d'une longueur d'une structure de route prédéterminée.

11. Véhicule (500) selon la revendication 10, comprenant en outre un dispositif de détermination de structure de route (140) pour identifier les caractéristiques de la structure de route prédéterminée.

12. Véhicule (500) selon la revendication 11,
dans lequel le dispositif de détermination de la structure routière (140) comprend un récepteur GPS pour fournir des informations de localisation indiquant une position actuelle du véhicule, et un contrôleur (110) pour identifier une route et une voie que le véhicule (500) parcourt en fonction de la sortie du récepteur GPS.

13. Véhicule (500) selon l'une quelconque des revendications 1 à 4,
dans lequel l'unité d'acquisition d'image (300) comprend une caméra d'extension de profondeur de champ.

14. Procédé d'imagerie de paroi de structure comprenant :
la détermination, sur la base de la présence ou de l'absence d'une structure de route prédéterminée (730), d'une des deux positions d'une unité d'acquisition d'image (300) montée sur un véhicule (600), comprenant une pluralité de caméras (331 à 334), dans une direction faisant face à une paroi d'une structure (600) dans un plan croisant une direction de déplacement du véhicule (500) ;
le coulissement de l'unité d'acquisition d'image (300) dans une direction coupant la direction de déplacement du véhicule (500) ;
la fixation de l'unité d'acquisition d'image (300) à une position déterminée des deux positions ; et
l'acquisition d'une image de la paroi de la structure (500) avec l'unité d'acquisition d'image (300) fixée à une position déterminée des deux positions pour maintenir des conditions de photographie communes pour l'image telles que l'état de mise au point, le grossissement et la luminosité de l'éclairage.
